## Europäisches Patentamt

(19) **European Patent Office**

**Office européen des brevets**

(11) Publication number: **0 162 479**
**B1**

(12) # EUROPEAN PATENT SPECIFICATION

(45) Date of publication of patent specification: **21.03.90**

(51) Int. Cl.⁵: **G 10 L 9/14**

(21) Application number: **85106853.6**

(22) Date of filing: **27.01.81**

(60) Publication number of the earlier application in accordance with Art. 76 EPC: **0 033 510**

(54) Speech synthesis system.

(30) Priority: **04.02.80 US 118139**
**04.02.80 US 118366**
**04.02.80 US 118156**
**04.02.80 US 118155**
**04.02.80 US 118255**
**04.02.80 US 118367**
**04.02.80 US 118138**

(43) Date of publication of application:
**27.11.85 Bulletin 85/48**

(45) Publication of the grant of the patent:
**21.03.90 Bulletin 90/12**

(84) Designated Contracting States:
**DE FR GB IT NL**

(56) References cited:
**ICASSP 79, 1979 IEEE INTERNATIONAL CONFERENCE ON ACOUSTICS, SPEECH & SIGNAL PROCESSING, 2nd-4th April 1979, Washington, D.C., pages 884-886, IEEE, New York, US; L. NEBBIA et al.: "Eight-channel digital speech synthesizer based on LPC techniques"**

(73) Proprietor: **TEXAS INSTRUMENTS INCORPORATED**
**13500 North Central Expressway**
**Dallas Texas 75265 (US)**

(72) Inventor: **Henderson, Alva E.**
**5610 70th Street**
**Lubbock Texas 79424 (US)**
Inventor: **Wiggins, Richard H.**
**6931 Mill Falls**
**Dallas Texas 75248 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

(56) References cited:
**IEEE TRANSACTIONS ON COMMUNICATIONS, vol. COM-23, no. 12, December 1975, pages 1466-1474, New York, US; CHONG KWAN UN et al.: "The residual-excited linear prediction vocoder with transmission rate below 9.6 kbits/s"**

Courier Press, Leamington Spa, England.

## Description

This is a division from an earlier application having the publication number 0 033 510.

This invention relates to a speech synthesis system according to the pre-characterizing part of Claim 1.

Several techniques are known in the prior art for digitizing human speech. For example, pulse code modulation, differential pulse code modulation, adaptive predictive coding, delta modulation, channel vocoders, cepstrum vocoders, formant vocoders, voice excited vocoders, and linear predictive coding techniques of speech digitization are known. The techniques are briefly explained in "Voice Signals; Bit by Bit" on pages 28—34 of the October, 1973 issue of *IEEE Spectrum*.

An example of a speech synthesis system having the features mentioned in the pre-characterizing part of Claim 1 is disclosed in "IEEE Transactions on Communications, vol. COM-23, No. 12, 12/75, pp. 1466—1474". The system described therein which is called a "Residual-Excited Linear Prediction Vocoder" adopts a modular approach in which each of two separate external sources of excitation signals may be respectively employed in the vocoder system at a particular time. Also, at any one time instant, only one source of excitation speech signals is present in this particular vocoder system, the one source of excitation signals being bodily removed as a module and being replaced by another module with a different source of excitation speech signals when this vocoder system is subject to operation in a hybrid mode.

In certain applications and particularly those in which digitized speech is to be stored in a memory, most researchers tend to use the linear predictive coding technique because it produces a very high quality speech using rather low data rates. A speech synthesis system utilizing linear predictive coding utilizes frames of data which are comprised of digital representations of pitch, energy and certain linear predictive coefficients which are utilized to control a digital filter. Such a system is capable of producing high quality synthetic human speech at a bit rate of as low as 1200 bits per second, utilizing a fixed rate of data frame entry.

A problem encountered in attempting to utilize variable frame rate data in speech synthesis circuits occurs when interpolation calculation is utilized between frames of data to enhance data rate capability. A fixed interpolation system wherein eight interpolation calculations take place between each frame of data is adequate for fixed frame rate systems; however, a variable frame rate system requires much more sophistication in interpolation circuitry. Specifically, during slowly changing periods of speech data, a more accurate portrayal of the human speech waveform may be achieved by increasing the number of interpolation steps between frames. Conversely, during rapidly changing aspects of human speech, few or no interpolations between frames of data are required to accurately synthesize human speech. Thus, in order to solve the aforementioned problem, a speech synthesis circuit must be able to vary the number of interpolation calculations taken between successive frames of speech data. Further, it has been discovered that in certain aspects of synthesis of human speech, the interpolation between frames of data may more accurately portray human speech if interpolated linearly, or in other circumstances, non-linear interpolation may provide greater accuracy.

As previously described, speech synthesis if carried out at an increased data rate would typically require a corresponding increase in the number of bits to be stored in a memory to synthesize a given quantity of human speech. To reduce the bit storage requirements of the memory while maintaining the capability of speech synthesis at a relatively high data rate is the subject of two papers delivered at the 1977 IEEE Conference on Acoustics, Speech and Signal Processing, and published in the record thereof on pages 409—412 and 219—222, respectively. One attempted solution was suggested in "Variable-to-Fixed Rate Conversion of Narrowband LPC Speech" by E. Blackman, R. Viswanathan and J. Makhoul. The aforementioned solution required transmission of pitch, gain and reflection coefficients in three separate variable rates, with separate transmission criterion and a three bit header code to distinguish transmissions. Additionally, transmit and receive buffers were necessary in that system to convert the transmission back into a fixed rate signal. The second attempted solution was documented in a paper entitled "The Application of a Functional/Perceptual Model of Speech to Variable-Rate LPC Systems" by R. Viswanathan, J. Makhoul and R. Wicks. This second solution involved the transmission of pitch and gain information a fixed frame rate, and utilizing a variable frame rate for transmission of reflection coefficients.

Another problem encountered in integrated circuit speech synthesis circuitry involves the conversion of digital signals into analog signals with sufficient accuracy to generate analog signals representative of human speech. While certain large values of speech signals may be clipped or truncated, accurate portrayal of small values in the speech waveform is necessary to synthesize human speech accurately. Standard digital-to-analog conversion techniques while adequate for higher voltage PMOS implementation lack sufficient accuracy and resolution for lower voltage applications such as CMOS circuitry. A lower voltage application such as CMOS circuitry prohibits the large voltage swing necessary to implement standard digital-to-analog converter circuitry.

Linear predictive coding systems utilize a linear predictive filter which is excited by voiced and unvoiced excitation signals. Typically, a voiced excitation signal is generated by a periodic source, such as a chirp function. In other linear predictive coding synthesis systems, the unvoiced excitation is typically characterized as white noise, or pseudorandom digital signal. Such systems implemented in integrated circuitry, typically generate a fixed digital value as an unvoiced excitation signal, and simulate a white noise input by pseudorandom generation of a sign bit to be utilized with the fixed digital value. Such systems adequately generate a signal in digital circuitry which is equivalent to a white noise excitation; however, variances in amplitude between a chosen fixed digital value for unvoiced excitation and the varying periodic excitation utilized result in unbalanced voiced/unvoiced excitation signals.

Typically, a speech synthesis system utilizes an excitation signal generated from fixed circuitry, or stored in non-volatile memory within the speech synthesis circuit. While this method is acceptable for synthesis of a standard speaker's voice, the range of excitation values necessary to provide alternate speaker's voices, or sound effects or the like, is not generally stored within speech synthesis circuits due to the wide range of possible values. The use of speech synthesis circuits in vocoder applications, wherein the excitation signal is the residual signal generated during the analysis phase of the vocoder operation is known in the art. Such vocoder synthesizers, however, are generally incapable of synthesizing speech from prerecorded data.

The present invention addresses the above explained problems by providing a speech synthesis system of the type defined in the pre-characterizing part of Claim 1 with the features contained in the characterizing part thereof. Such a system is capable of generating synthetic speech from excitation signals which may be either prerecorded and stored within the speech synthesis circuit or spontaneously generated by the operator of the system. To this end, there is provided a speech synthesis circuit capable of synthesizing human speech from excitation signals which may be either prerecorded and stored within the speech synthesis circuit or which may be residual excitation signals generated during speech analysis. In accordance with the present invention, a speech synthesis system implementable in an integrated circuit device and capable of converting frames of data into analog signals representative of human speech is constructed. The frames of data are comprised of digital representations of values of pitch, energy and certain filter coefficients, which are stored in non-volatile memory. The filter coefficients are utilized to control a linear predictive filter which is excited by voiced and unvoiced excitations stored in non-volatile memory. A control circuit coupling the excitation signals to the linear predictive filter allows the operator to select an external excitation signal rather than the precalculated stored excitation signals. Thus, the synthesizer may be utilized in a vocoder application, wherein a residual excitation signal transmitted from an analysis circuit may be utilized as the excitation signal.

The speech synthesis system is further capable of synthesizing human speech from frames of data which may consist of parameters of varying lengths and is implementable in an integrated circuit device. The system is capable of converting frames of data into analog signals representative of human speech, wherein the frames of data are comprised of digital representations of values of pitch, energy and certain filter coefficients. The binary representations of pitch, energy and filter coefficients may be inputted as prearranged coded values or may be directly loaded into a data input register. Control circuitry within the speech synthesis system detects a control signal indicating whether the parameters being inputted are in coded or uncoded format, and provides decoding circuitry within the speech synthesis system. All calculations within the speech synthesis system are thus based upon uncoded input parameters.

Additionally, the speech synthesis system is capable of accurately synthesizing human speech at low voltage levels. To this end, the speech synthesis system includes a digital-to-analog converter capable of accurately modeling complex waveforms at low voltage levels to provide a low voltage speech synthesis system with a linear predictive filter. The linear predictive filter utilizes reflection coefficients to produce digital signals representative of human speech. An integrated circuit controller controls the access of digitized speech data stored in a memory circuit. Synthesis and control circuits are implemented in metal-insulator-semiconductor technology to provide low voltage operation. A pulse width modulated digital-to-analog converter permits accurate conversion of digital signals into analog signals in low voltage operation.

Brief description of the drawings

The novel features believed characteristic of the invention are set forth in the appended claims. The invention itself, however, as well as a preferred mode of use, further objects and advantages thereof, will best be understood by reference to the following detailed description of an illustrative embodiment when read in conjunction with the accompanying drawings, wherein:

Figure 1a is a view of an electronic learning aid which is a suitable structure for enclosing the speech synthesizer system;

Figure 1b is a generalized block diagram of a speech synthesis system;

Figures 2a and 2b form a detailed block diagram of the speech synthesizer;

Figure 3 is a logic diagram of the input data register and frame control PLA;

Figure 4 is a logic diagram of the interpolation counter circuitry;

Figure 5 is a detailed logic diagram of the speak latch circuitry and status latch circuitry.

Figure 6 is a detailed logic diagram of the instruction decoder circuitry.

Figure 7 is a detailed logic diagram of the parameter load control circuitry.

Figures 8a and 8b form a composite block diagram of the array multiplier;

Figures 9a—9d are detailed logic diagrams of the blocks which form the array multiplier.

Figures 10a—10c are detailed logic diagrams of the recoding logic;

Figure 11 is a detailed logic diagram of the filter adder;

Figure 12 is a detailed logic diagram of one cell of the B-Stack, PPC, Y Latch register;

Figure 13 is a detailed logic diagram of multiplex 58 and register 66;

Figures 14a and 14b are detailed logic diagrams of the digital-to-analog and output circuitry.

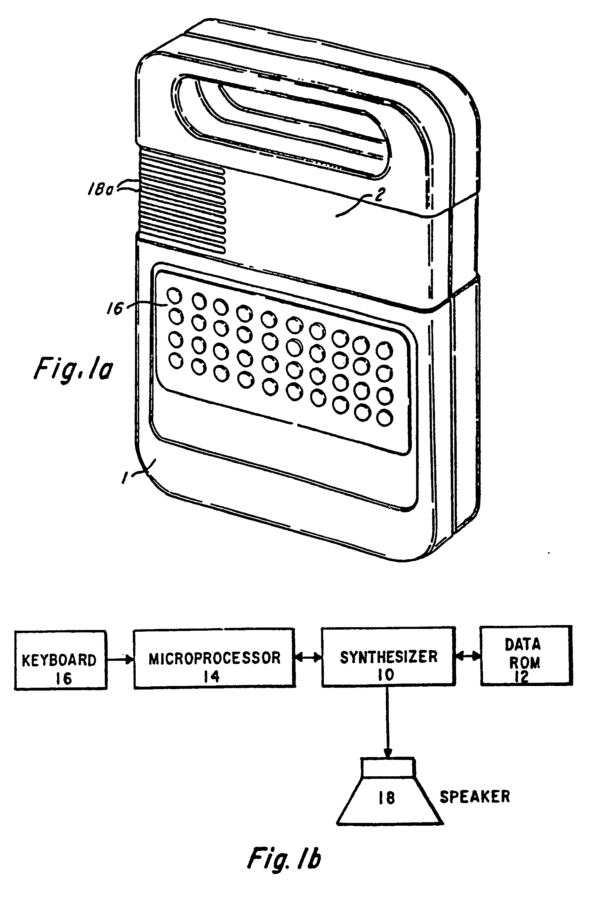

Referring to Figure 1a, there is shown an electronic learning aid which may serve as a suitable structure for enclosing the speech synthesis system of the present invention. Figure 1b shows a generalized block diagram of the major components which make up such a learning aid Keyboard 16 may be a standard matrix keyboard such as the type disclosed in U.S. Patent No. 4,074,055. Various algorithms required to implement the desired modes of operation of an electronic learning aid, electronic language translator or other applications may be programmed into the microprocessor in a manner well known in the art.

Data ROM 12 is a stanrdard non-volatile Read Only Memory. The coded or uncoded filter parameters which are utilized to control synthesizer 10 are stored therein. Synthesizer 10 is a linear predictive filter type synthesizer such as is described in DE—A—28 26 570; however, improvements in the synthesizer circuitry which result in higher quality speech, lower data rates and smaller circuit size are incorporated herein. Synthesizer 10 is controlled by microprocessor 14, and generates synthetic speech at speaker 18 by utilization of certain filter parameters stored in ROM 12. While synthesizer 10 is shown being controlled by micrprocessor 14, it will be understood by those skilled in the art that any digital control mechanism may control synthesizer 10. In an embodiment disclosed herein, in which synthesizer 10 is implemented in complementary MIS, such as CMOS, it is preferable that microprocessor 14 also be implemented in CMOS to permit both devices to be operated from a single low voltage source, such as a battery. The linear predictive filter utilized in synthesizer 10 is a single multiplier, lattice type filter similar to the filter described in DE—A—28 26 570. The reader is encouraged to read the aforementioned German Patent Application to familiarize himself with the basic operation of this complex circuitry.

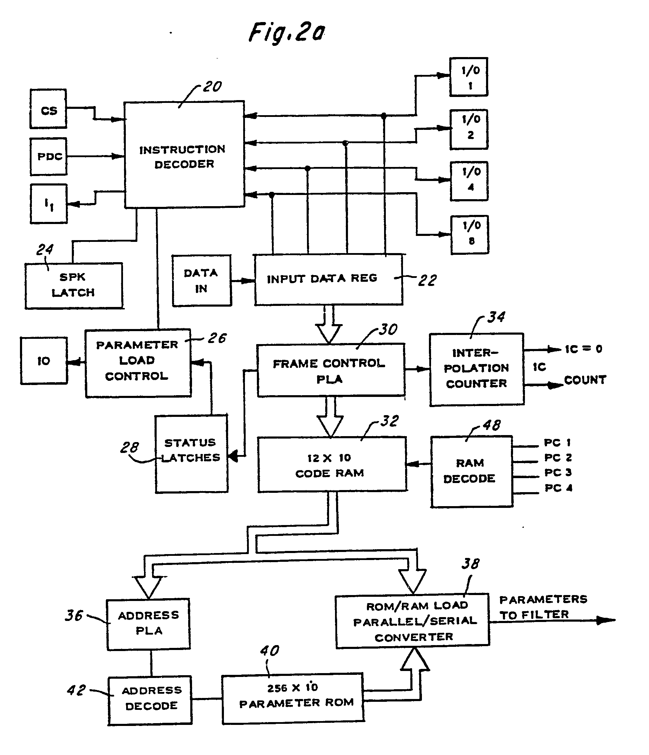

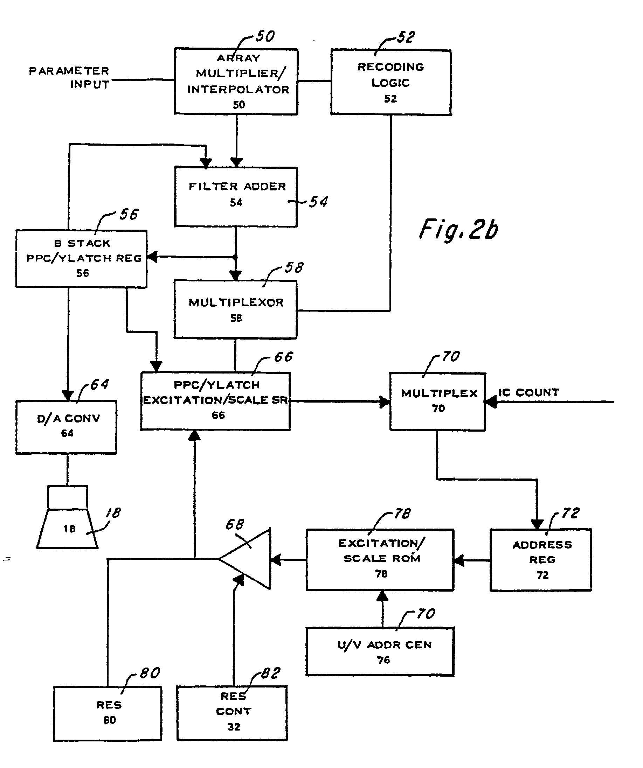

Referring to Figures 2a and 2b, there is shown a detailed block diagram of synthesizer 10. Most of the blocks of Figures 2a and 2b are shown in greater detail in later figures.

Speech data, comprising either coded or uncoded filter coefficients, is received by synthesizer 10 from ROM 12 at the Data In pad of input register 22, input register 22 is a ten bit register latch which accepts the speech data serially and outputs the data in parallel to frame control PLA 30.

Input/output pads 1, 2, 4 and 8 accept control data from microprocessor 14, and input the control data to instruction decoder 20. Input/output pads 1, 2, 4 and 8 are bidirectional lines and microprocessor 14 is therefore able to access speech data out of input register 22 as in an alternate embodiment wherein a control mechanism may be utilized to examine such data. Instruction decoder 20 is utilized to decode the instructions which microprocessor 14 inputs to synthesizer 10. Instruction decoder 20 also sets speak latch 24 and parameter load control 26. Speak latch 24 generates logic signals which are utilized throughout synthesizer 10 to indicate that synthetic speech is being generated. Parameter load control 26 is utilized to control the loading of data into input register 22. In addition to instruction control of parameter load control 26, the status latch 28 is also capable of controlling the input of data to input register 22 by detecting certain special states of input data which will later be described in detail.

Frame control PLA 30 is utilized to decode the aforementioned special states of input data which in turn set the special state latches in status latch 28. Frame control PLA 30 also decodes special states of the input data which control how many interpolation steps take place between each frame of data, thereby allowing synthesizer 10 to vary the rate at which data is applied. Interpolation counter 34 is utilized to generate a signal which controls the number of interpolation steps which will be calculated between adjacent frames.

Code RAM 32 is a twelve by ten bit RAM utilized to store an entire frame of data. An entire frame of data will include a pitch parameter, an energy parameter and ten filter parameters. The maximum length of an uncoded parameter is ten bits, and twelve parameters are normally required for each frame.

In one mode of operation, synthesizer 10 generates synthetic speech from uncoded parameters. These parameters are transferred from code RAM 32 to the ROM/RAM load, parallel/serial converter 38, to be serially loaded out to the linear predictive filter. In the alternative mode of operation the coded parameters are utilized by address PLA 36 to generate an address for the appropriate uncoded parameter stored in parameter ROM 40. The uncoded parameters from ROM 40 are inputted to converter 38 and then serially loaded out to the linear predictive filter.

The parameters outputted from converter 38 are coupled into array multiplier/interpolator 50. Array multiplier/interpolator 50 functions similarly to the array multiplier of US—A—4,209,844 with the additional capability of conducting interpolation steps. Array multiplier/interpolator 50 is coupled to filter adder 54, which is utilized to perform the additions and subtractions necessary to implement the filter function. The output of adder 54 is coupled to B stack, PPC register and Y latch register 56 and to multiplexer 58. Register 56 serves as a temporary store for those intermediate values necessary to perform the filter calculations, and storing the pitch period count (PPC). Register 56 also serves to drive D to A converter 64 with appropriate output values. D to A converter 64 converts the output of the filter to analog signals which drive speaker 18. Multiplexer 58 serves to couple information back up into multiplier/interpolator 50 through recoding logic 52 from adder 54 or the multipurpose shift register 66.

Shift register 66 is a multipurpose shift register utilized to couple excitation data or scale data from ROM 78 into multiplier/interpolator 50 through multiplexer 58 and recoding logic 52. Scale data is utilized by multiplier/interpolator 50 to perform interpolation. Additionally, shift register 66 couples pitch period counter (PPC) information which is utilized to address excitation data in ROM 78. Pitch period counter information is coupled through multiplex 70 to address register 72 where it is utilized to address excitation data in ROM 78. Unvoiced address generator 76 is utilized during unvoiced periods of speech to randomly address one of two excitation values, utilized during unvoiced speech, which are stored in ROM 78.

Tri-state buffer 68 is utilized to control the excitation input to shift register 66. Synthesizer 10 may be utilized as a residually excited synthesizer, in a vocoder application, for example. In such, a residual excitation signal is applied to residual input pin 80, and tri-state buffer 68 is disabled by a control signal at residual control pin 82. Thus, parameters are inputted to multiplier/interpolator 50 from an external source, rather than through converter 38.

The synthesizer 10 is preferably implemented using precharged conditional discharge type logics. Thus, four clock signals, φ1—φ4 are appropriate for use in such precharge, conditional discharge logic. There are two main clock phases (φ1 and φ2) and two precharge clock phases (φ3 and φ4). Phase φ3 goes high during the first half of phase φ1 and serves as a precharge therefor. Phase φ4 goes high during the first half of phase φ2 and serves as a precharge therefor. A set of clocks φ1—φ4 is required to clock one bit of data, and thus correspond to one time period.

Timing signals, labelled T1—T22, each having a period on the order of 4.5 microseconds are utilized throughout the system. Selecting a time period on the order of 4.5 microseconds permits data to be outputted from synthesizer 10 at a 10 kilohertz rate (i.e., at a 100 microsecond period) which provides for a frequency response of 5 kilohertz in the digital-to-analog converter 64. It will be appreciated by those skilled in the art, however, that depending upon the frequency response desired, the number of reflection coefficients utilized and the type of logics utilized, the periods or frequencies of the clocks and clock phases may be substantially altered.

Thirteen parameter count (PC) signals are also utilized in the depicted embodiment of the invention. The first twelve of these, PC=0 through PC=11 correspond to the times when the energy, pitch, and K1—K10 reflection coefficients are available in parallel-serial converter 38. Each of the first twelve parameter counts comprise two cycles, referred to as the A and B cycles. Each cycle, whether A or B, begins at T18 and ends at the next T18. During each parameter count the value in parallel-serial converter 38 is utilized as a target value for interpolation with an existing value stored in a recirculating portion of multiplier interpolator 50. During the A cycle, the appropriate existing parameter in withdrawn from the recirculating portion of multiplier/interpolator 50, and during the B cycle the newly interpolated value is reinserted.

The thirteenth parameter count, PC=12 is provided for timing purposes so that all twelve parameters are interpolated once each 2.5 millisecond, and for indicating that period of time during which variable frame rate data is inputted.

As was discussed earlier with respect to interpolation, the synthesizer of the present invention is capable of performing from zero to one hundred twenty seven interpolations between each frame of parameters inputted. A new interpolation count signal is available from interpolation counter 34 every 2.5 milliseconds, and is utilized to address a scale value in excitation/scale ROM 78. Thus the period for interpolation remains constant at 2.5 milliseconds, regardless of the number of interpolation steps between two values.

New parameters may be inputted to synthesizer 10 at a fifty hertz frame rate. It will be seen subsequently that in multiplier/interpolator 50, the pitch data, energy data and reflection coefficients are utilized as ten bit binary numbers. If each of the twelve parameters were updated with a ten bit binary number at a fifty hertz rate, a 12×10×50, or 6,000 hertz bit rate would result.

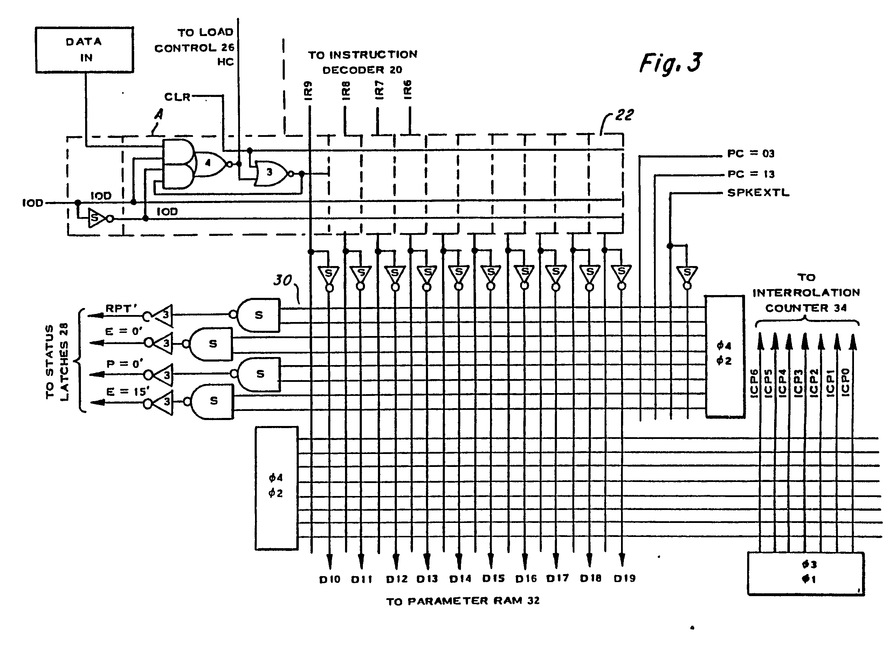

Various portions of synthesizer 10 will now be described in detail with reference to Figures 3 through 14, which depict in detail the logic circuits which implement synthesizer 10. Certain well known sections of the block diagram depicted in Figures 2a and 2b are not included in Figures 3—14. The following discussion, with reference to Figures 3—14, refers to logic signals available at many points in the circuit. Synthesizer 10, in the embodiment disclosed, is implemented in complementary MIS, such as CMOS. It must be remembered that in CMOS devices, a logic zero corresponds to a zero voltage, that is Vss. Further, the P channel devices depicted in the aforementioned figures are conductive when a logic zero is applied to their respective gates. Also, a logic one in CMOS devices corresponds to a positive voltage, +3V in the embodiment disclosed (Vdd). Therefore, the N channel devices depicted are conductive when a logic one is applied to their respective gates. When a logic signal is referred to which is unbarred, the signal is to be interpreted as "True" logic, that is, a binary one indicates the presence of Vdd and a binary zero indicates the presence of Vss. Logic signals which are barred indicate "False" logic and the aforementioned relationships are reversed. It should also be understood that a numeral in a clocked gate indicates which of the clock phases is utilized, as a precharge clock. The letter "S" in a gate indicates the gate is statically operated.

Referring to Figure 3, there is shown a logic diagram of input data register 22. Input data register 22 is a ten stage register, the first stage of which is shown within the detail marked A. Input data register 22 is ten stages in length to allow synthesizer 10 to accommodate uncoded parameters up to ten bits long.

Certain signals are utilized to control input data register 22. A clear signal (CLR) is generated by parameter load control 26, and is utilized to clear input data register 22 at time T22, during speech. The IO, ROM control signal, is delayed to form IOD, which is utilized to clock bits of data into input data register 22. An optional control signal, HC, is utilized as a modified Huffman code. This signal is utilized during variable frame rate operation to control the receipt of the Huffman code, which, those skilled in the art will recall, is a variable length code.

Frame control PLA 30 is shown in Figure 3. PLA 30 is a programmable PLA, and is therefore shown without gates. PLA 30 is utilized to detect certain special states which occur in the input data. Among those special states are those which effect the length of each individual frame, including: the Repeat state (RPT); the "Energy equal zero" state (E=0); the "Pitch equal zero" state (P=0); and the "End of file" or "Energy equal fifteen" state (E=15).

Additionally, the lower half of PLA 30 also decodes the Huffman code mentioned earlier, or a standard binary code, either of which may be utilized during variable frame rate operation. The decoded variable frame rate data is utilized to generate the signals ICP6—ICP0, which are in turn utilized to control interpolation counter 34. The parameters in input data register 22 are also passed through PLA 30 to the parameter RAM 32. These signals are shown as DI0—DI9.

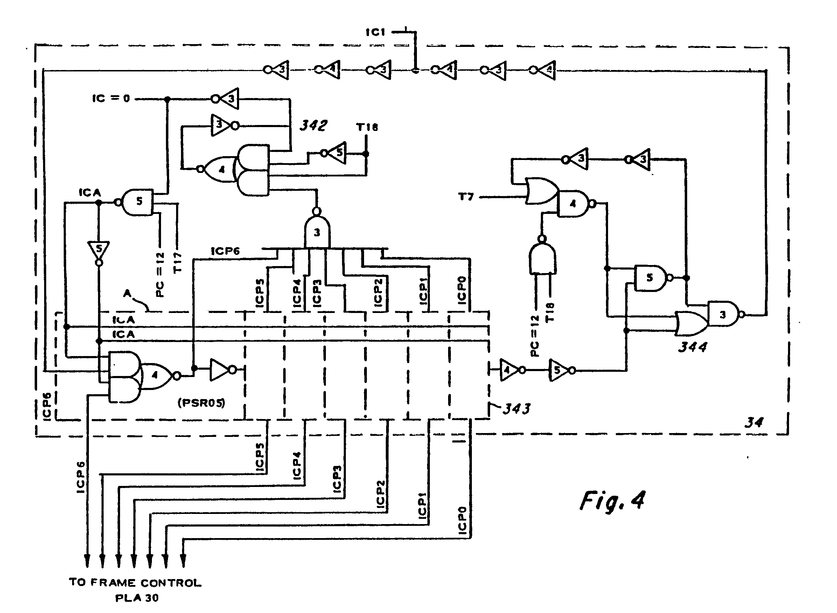

Interpolation counter 34 is shown in detail in Figure 4. Previously attempts at variable frame rate voice synthesis have had difficulty due to the problem of varying lengths of time between each frame, and the question of interpolation therein. Interpolation counter 34 is capable of utilizing the variable frame length data to control the number of interpolation steps between each frame. Thus, during rapidly changing speech, few or no interpolations take place between data frames. However, during slowly changing speech, up to one hundred twenty seven interpolations may take place.

Register 343 is a seven stage shift register, which is initially set by the signals ICP6—ICP0. The first stage of register 343 is shown within the detail marked "A". The signals ICP6—ICP0 initially set register 343 to some number, the interpolation count, which is between zero and one hundred twenty seven. The interpolation count initially set into register 343 is clocked out and around through a series of inverters which generate an appropriate amount of delay. Gates 344 are utilized to selectively increment the interpolation count after each interpolation. The new interpolation count is then shifted back into register 343, whose gate 341 is utilized to detect the "interpolation count equal zero" (IC=0) state. When the IC=0 state is detected, gates 342 are utilized to latch this condition. The IC=0 condition is utilized throughout synthesizer 10 to indicate the end of interpolation, and allow the entry of new data. The interpolation count is outputted from interpolation counter 34 to be utilized as part of the address in excitation/scale ROM 78.

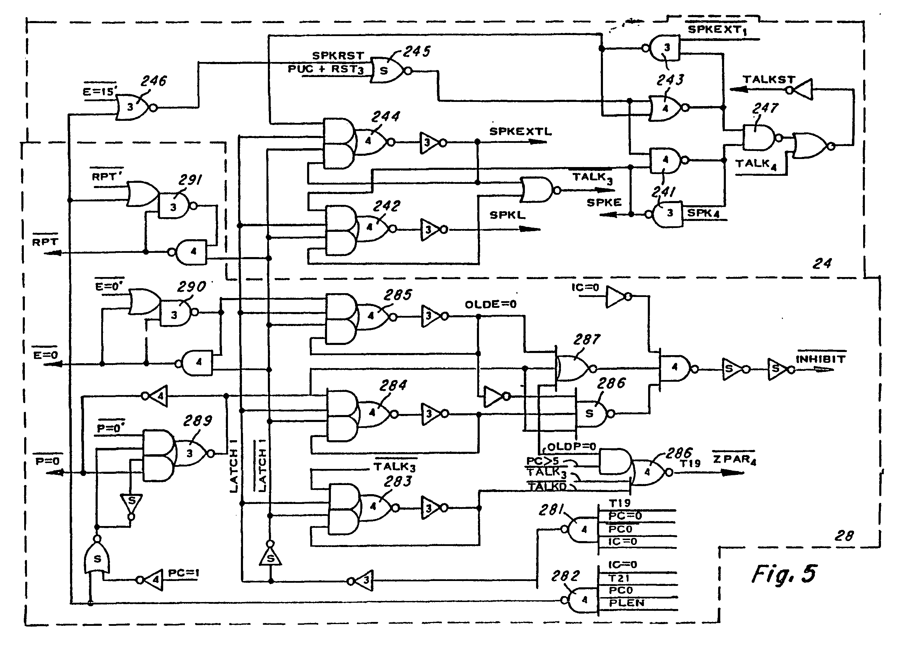

Figure 5 shows a detailed logic diagram of speak latch 24. Speak latch 24 consists of four latch circuits utilized to set and hold signals which indicate synthesizer 10 is generating speech. Gates 241 form a latch which has SPK as its input. SPK is generated by instruction decoder 20 in response to an input command which causes speech to be generated utilizing coded speech parameters. Instruction decoder 20 may also generate SPKEXT in response to an input command which causes speech to be generated utilizing uncoded, ten bit, binary parameters, as discussed earlier with respect to an alternate method of operation. The SPK command is utilized to generate the "speak enable" (SPKE) command out of gates 241, and to set latch 242 to generate SPKL. The SPKEXT command will set a latch 244 comprised of gates 243, which in turn will set latch 244 and generate SPKEXTL. The occurrence of either SPKEXTL or SPKL will in turn generate the TALK signal. Gate 245 is utilized to reset the latches comprised of gates 241 and 243 during a power up, or after a reset signal. The speak reset (SPRST) command is generated by gate 246 by receipt of an "end of file" or "Energy equal fifteen" (E=15) code. Additionally, gate 247 is utilized to latch out a "talk status" signal which indicates synthesizer 10 is generating speech. Thus, the logic signals outputted by speak latch 24 are utilized throughout synthesizer 10 to indicate the generation of speech.

Status Latches 28 are also shown in detail in Figure 5. The function of the various status latches is identical to the function described in US—A—4,209,836 and will only be described briefly herein.

Latching signal LATCH 1 is generated by gate 281 at the beginning of a frame of data, the inputs to gate 281 all signifying a frame start. The LATCH 1 signal will strobe any SPKEXTL or SPKL signal at latch 244 or 242 in the speak latch 24, and will additionally strobe the output of latches 289 (the "Pitch equal zero" (P=0 latch) and 290 (the "Energy equal zero" (E=0) latch into latches 284 and 285 to generate Old E=0 and Old P=0. The contents of latches 284 and 285 are utilized in conjunction with the P=0 signal to generate the INHIBIT signal. As in the synthesizer of US—A—4,209,836 the INHIBIT signal is utilized to inhibit interpolations in certain conditions. During transition from voiced to unvoiced speech, or unvoiced to voiced speech, it is advantageous to insert new parameters directly, without interpolations. Also, interpolations are not desirable when transitioning from silence to speech.

As was explained in detail in US—A—4,209,836 it has been determined that fewer parameters are required to accurately represent unvoiced speech. Therefore, gate 288 is utilized to generate a "zero parameter" (ZPAR signal during unvoiced speech (Old pitch equal zero) after the parameter count has reached five (PC 5). Gate 288 also zeroes all parameters during non-speaking periods, by utilizing the TALK signal and the TALKD signal generated by latch 283.

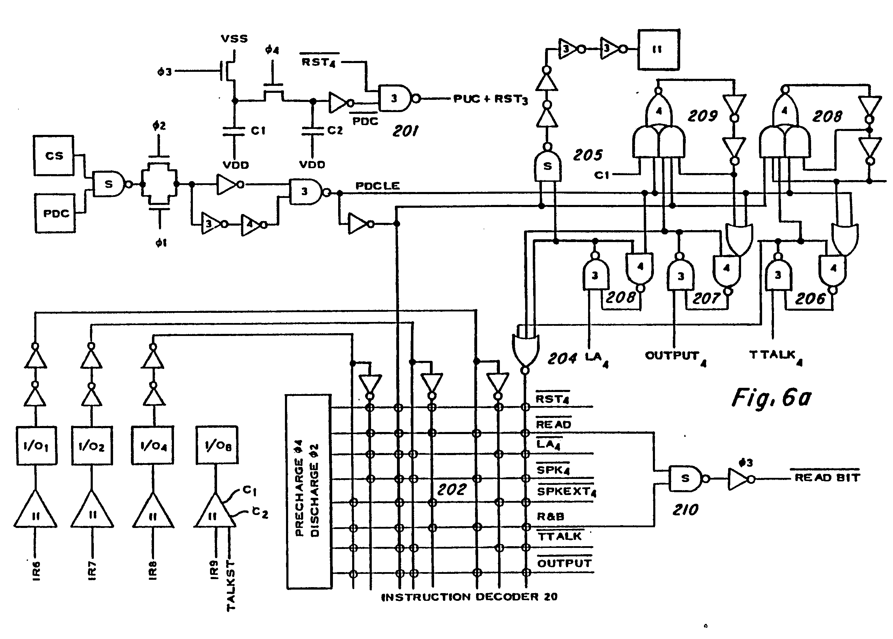

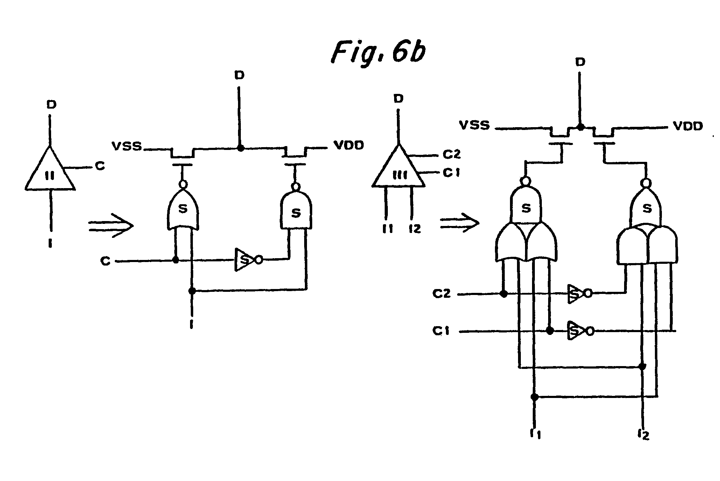

Referring to Figure 6, there is shown a detailed logic diagram of instruction decoder 20. Instructions from microprocessor 14 are input to synthesizer 10 on I/O pins I/O1, I/O2 and I/O4. The instructions are clocked in each time a Processor Data Clock (PDC) signal is generated. The instructions are decoded by PLA 202. A brief description of each instruction and its function is listed below.

The "Reset" (RST) instruction is a software reset instruction which is utilized by gate 201 in conjunction with the synthesizer "power up clear" (PUC) signal to form PUC+RST. This instruction is then utilized to reset speak latch 24.

The "Read" (READ) instruction is a signal from microprocessor 14 telling synthesizer 10 to access one data bit from ROM 12.

The 'Load Address" (LA) instruction is an instruction which requires two PDC signals to execute. On the first PDC, the LA instruction is latched into latch 203. Latch 203 disables PLA 202 so that no command is decoded. On the second PDC, gate 205 is enabled, causing instruction decoder 20 to output an I1 signal to ROM 12. The I1 signal instructs ROM 12 to load four bits of address.

The "Speak" (SPK) instruction causes synthesizer 10 to begin synthesizing speech utilizing coded speech parameters. The SPK instruction is utilized throughout synthesizer 10.

The "Speak External" (SPKEXT) instruction causes synthesizer 10 to begin synthesizing speech utilizing direct, uncoded, parameter loading.

The "Read and Branch" (R+B) instruction is an instruction to ROM 12 to internally read data and load the data back into its address register, to allow indirect addressing.

The "Test Talk" (TTALK) instruction and the "output" (OUTPUT) instruction both require three PDC signals to execute. The TTALK instruction sets latch 206 and disables PLA 202 through gate 240. On the next PDC, the output of latch 206 is clocked through gate 208 to generate signal C2. Signal C2 is utilized to control the buffer between I/O8 and IR9, allowing the "talk status" (TALKST) signal to be output on I/O8. Thus, microprocessor 14 can determine whether synthesizer 10 is talking. The next PDC signal shuts off the C2 signal and resets latch 206. The OUTPUT instruction also requires three PDC signals to execute. Latch 207 and gate 209 interact in the same manner as latch 206 and gate 208. However, in the case of the OUTPUT instruction, a C1 signal is generated which enables the buffer to all of the I/O pads. In this manner, microprocessor 14 can access data in ROM 12, through synthesizer 10.

Detailed diagrams of the buffers for the I/O pads are also shown in Figure 6b.

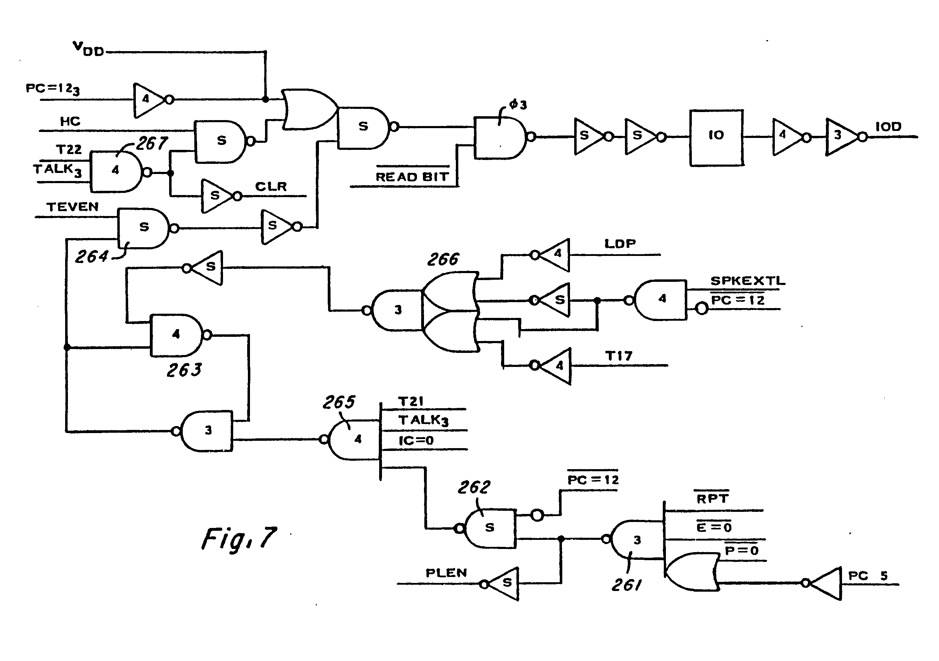

Parameter load control 26 is shown in detail in Figure 7. Parameter load control 26 generates the I0 signal to ROM 12. The I0 signal and I1 signal, generated by instruction decoder 20, control ROM 12. The I0 signal is utilized to clock data out of ROM 12.

Gate 261 is utilized to generate the Parameter Load Enable (PLEN) signal which allows parameters to be written into code RAM 32. PLEN is generated unless one of three conditions exist at the input of gate 261. When a repeat (RPT) bit is detected, the PLEN signal stops. A RPT bit is utilized when old parameters are to be repeated, thus no new parameters should be loaded. When the Energy parameter is zero (E=0), indicating silence, the PLEN signal is disabled. Lastly, during unvoiced speech the system utilizes fewer parameters to accurately represent speech. Thus, when the pitch parameter is equal zero (P=0) and the parameter count indicates that the first six parameters have been loaded (PC>5), PLEN is disabled.

Gate 262 is utilized during variable frame rate operation to allow the frame rate data to be loaded (at PC=12) despite a condition which would preclude loading parameters. Gate 266 is utilized to set latch 263, the output of which is utilized in conjunction with the even clock times (TEVEN) by gate 264 to generate I0 signals. Gate 266 is utilized to distinguish between loading coded or direct parameters, since in the embodiment disclosed coded parameters consist of two to seven bits and direct parameters consist of ten bits. Gate 265 is utilized to reset latch 263. Gate 267 is utilized to generate the CLR signal which clears the input register.

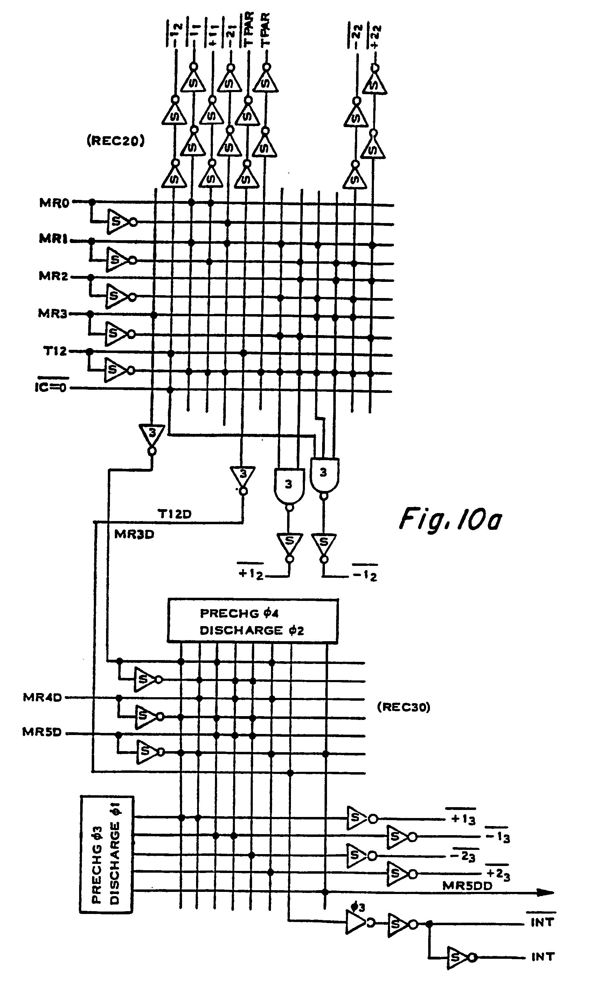

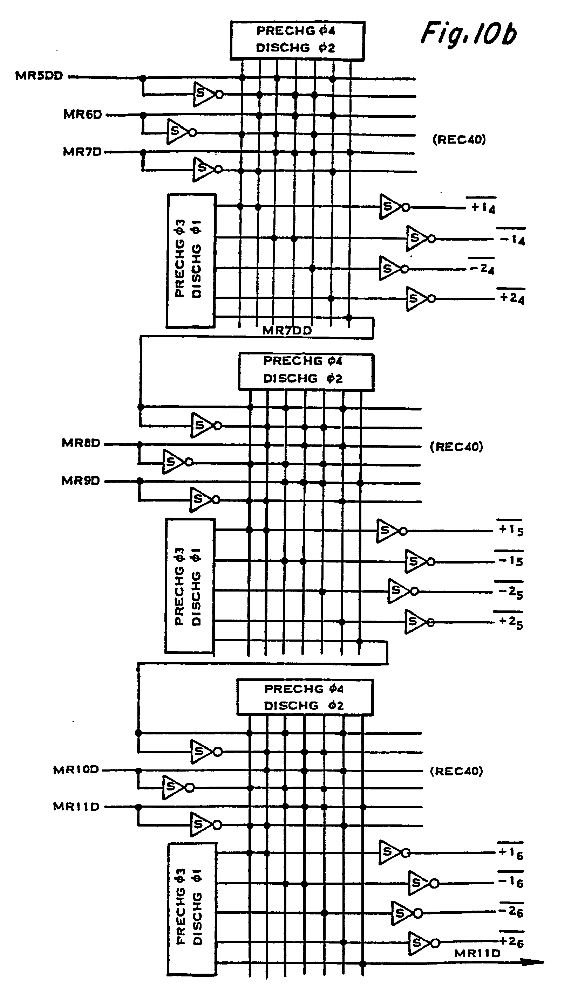

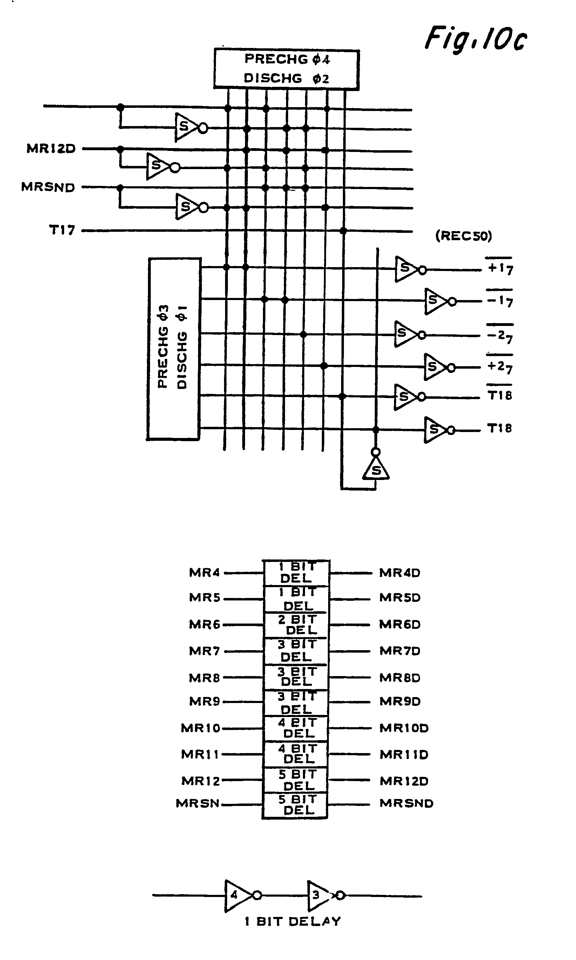

Recoding logic 52 couples the outputs of multiplexor 58 to multiplier/interpolator 50. Recoding logic 52 is shown in detail in Figures 10a—d. Recoding logic 52 consists of six stages, three of which are identical, as seen in Figure 10b. The first stage of recoding logic 52 (labelled REL 20) generates signals for the first two stages of multiplier/interpolator 50. The subscripts on each control signal indicate to which stage of multiplier/interpolator 50 it is coupled. The third stage of mutiplier/interpolator 50 and the seventh stage require additional control signals due to the interpolation function therein. The INT signal discussed in the interpolation section is generated in the section of reading logic 52 labelled REL 30 in Figure 10a, and the T18 signal for the seventh stage is generated by the stage labelled REL 50 in Figure 10c. Recoding loggic 52 outputs $\overline{+2}$, $\overline{-2}$, $\overline{+1}$ and $\overline{-1}$ to each stage of multiplier/interpolator 50 with the exception of stage one

which receives only $\overline{+1}$, $\overline{-1}$, and $\overline{-2}$ outputs. Effectively, as seen in US—A—4,209,836, recoding logic 52 permits multiplier/interpolator 50 to process, in each stage thereof, two bits of information in lieu of one, by utilizing Booth's Algorithm. Booth's Algorithm is explained in "Theory and Application of Digital Signal Processing", published by Prentice-Hall 1975, at pp. 517—18.

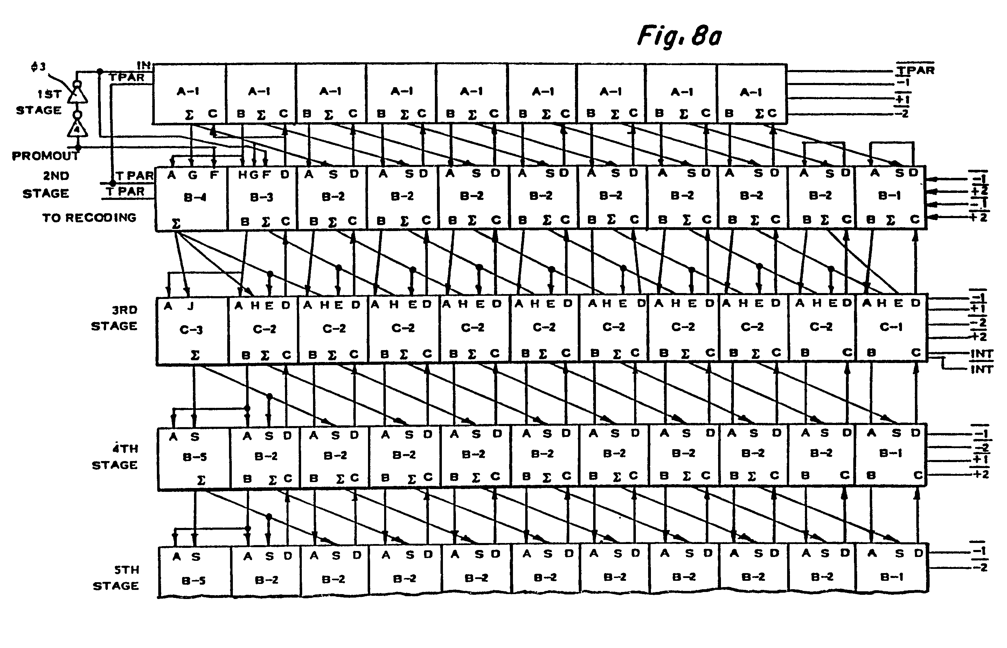

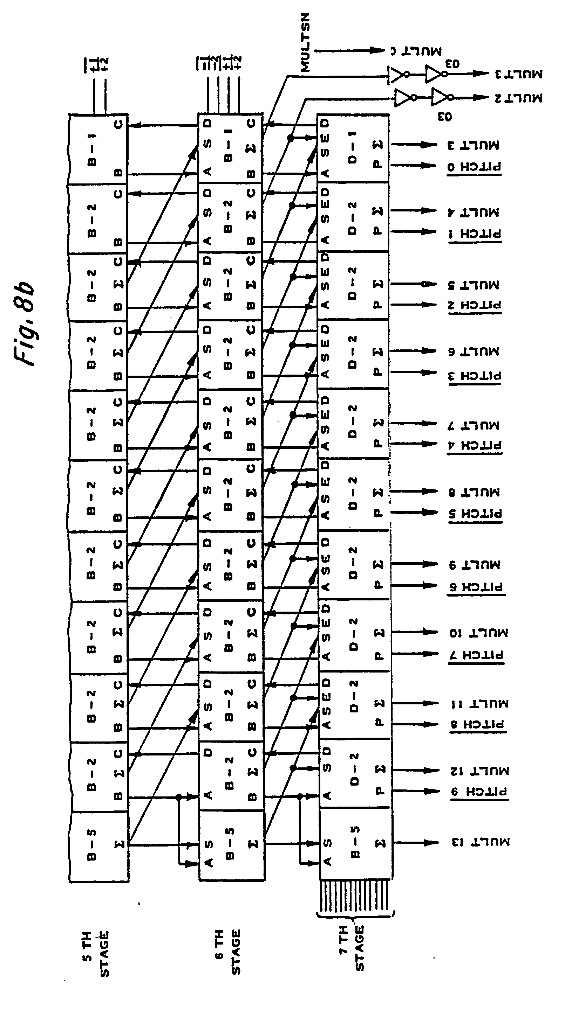

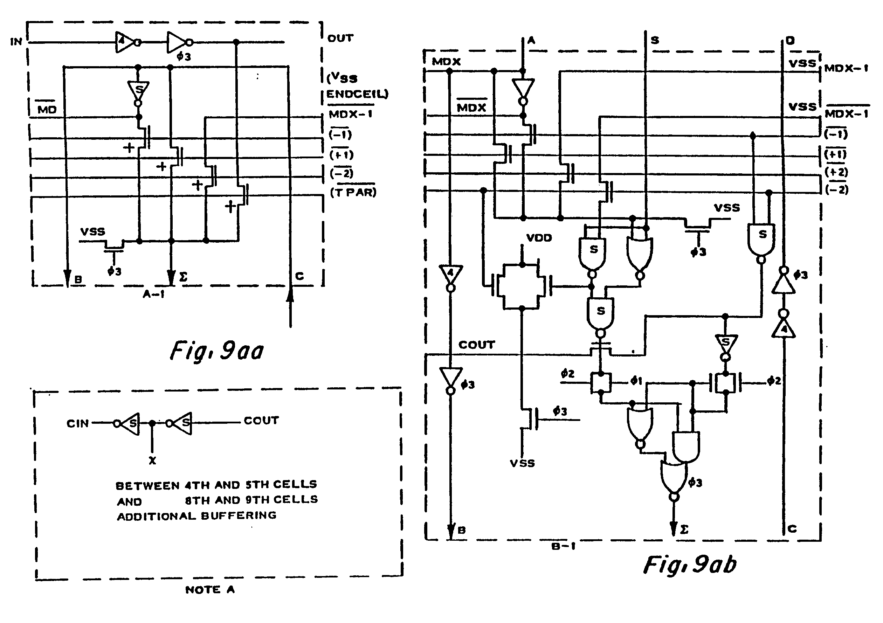

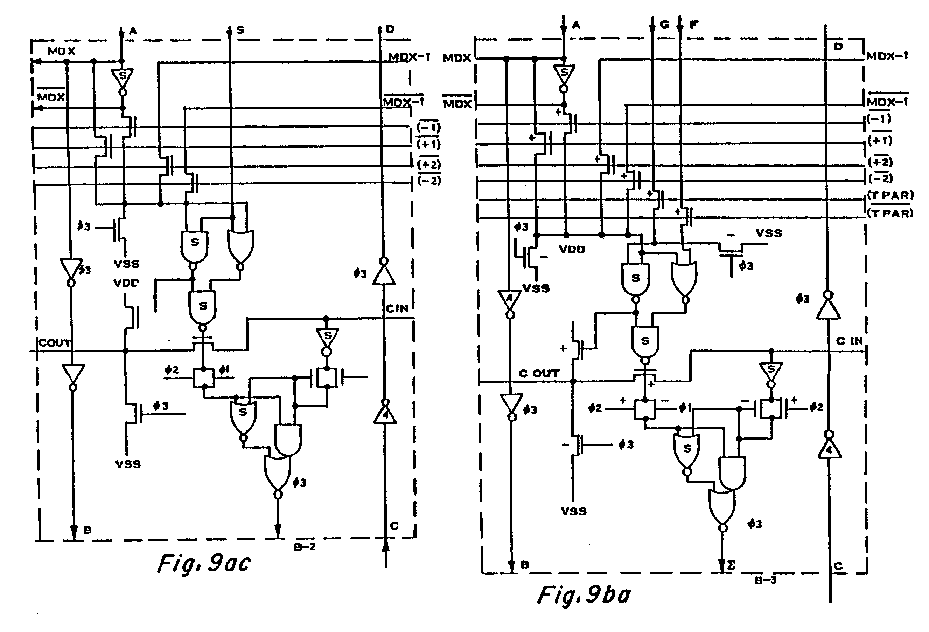

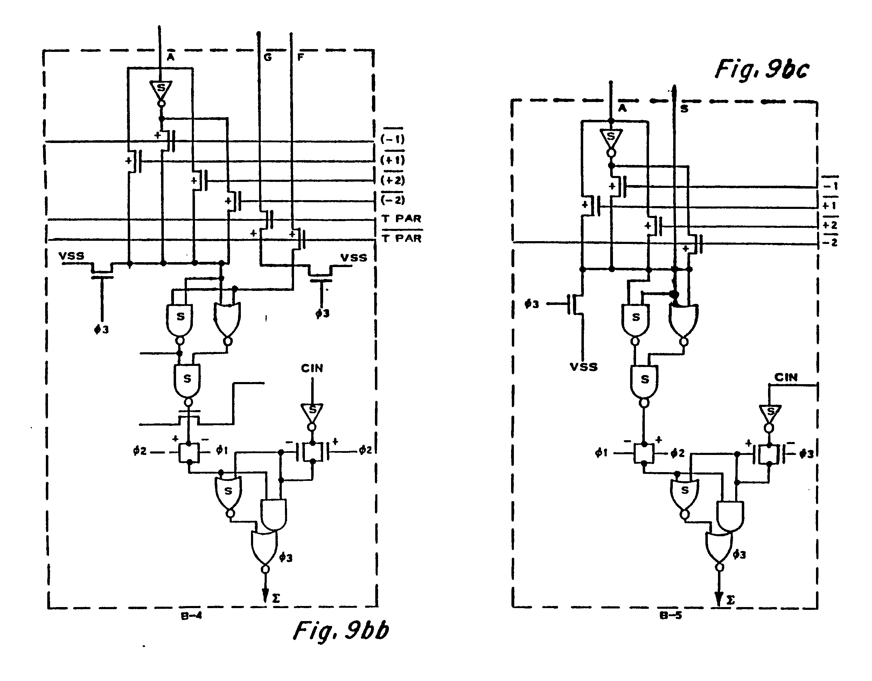

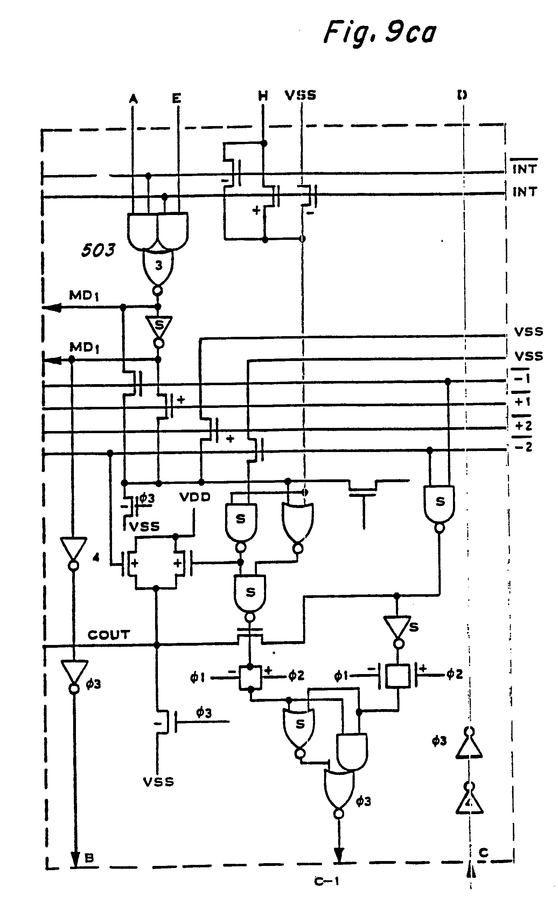

A block diagram of multiplier/interpolator 50 is formed by the composite of Figures 8a and 8b. Multiplier/interpolator 50 is an array multiplier. Array multipliers are sometimes referred to as "Pipeline Multipliers". For example, see "Pipeline Multiplier" by Granvill Ott, published by the University of Missouri. Multiplier/interpolator 50 has seven stages, stage 1 through 7 and operates similarly to the array multiplier disclosed in US—A—4,209,844. The equations in Table I herein represent the operation of the digital filter wherein multiplier/interpolator 50 and filter adder 54 are utilized to solve these equations.

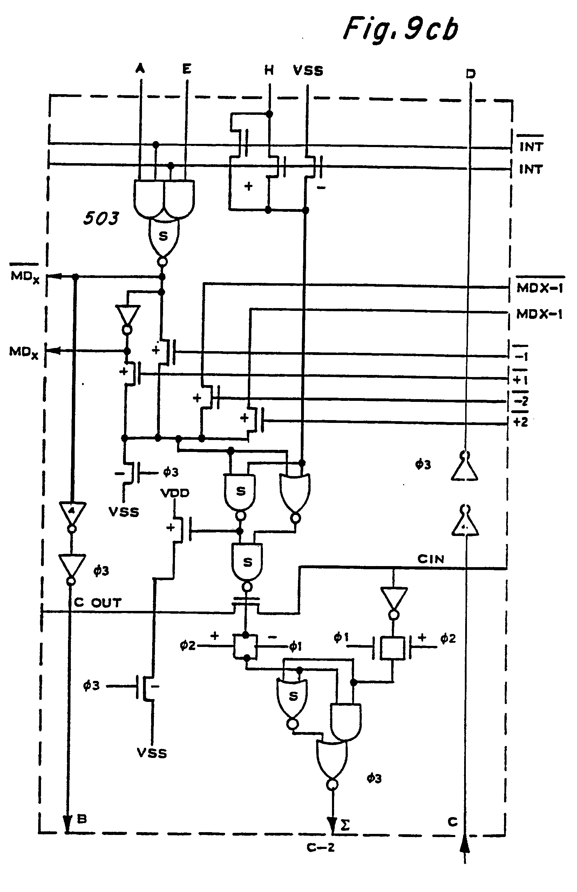

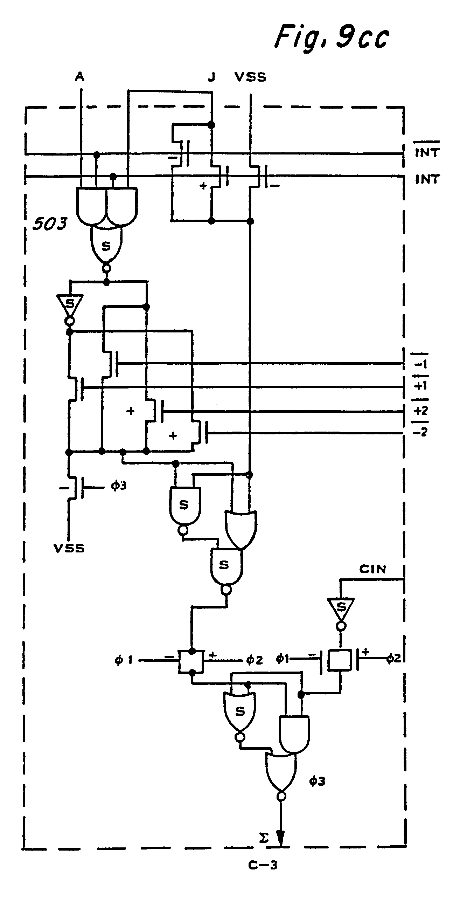

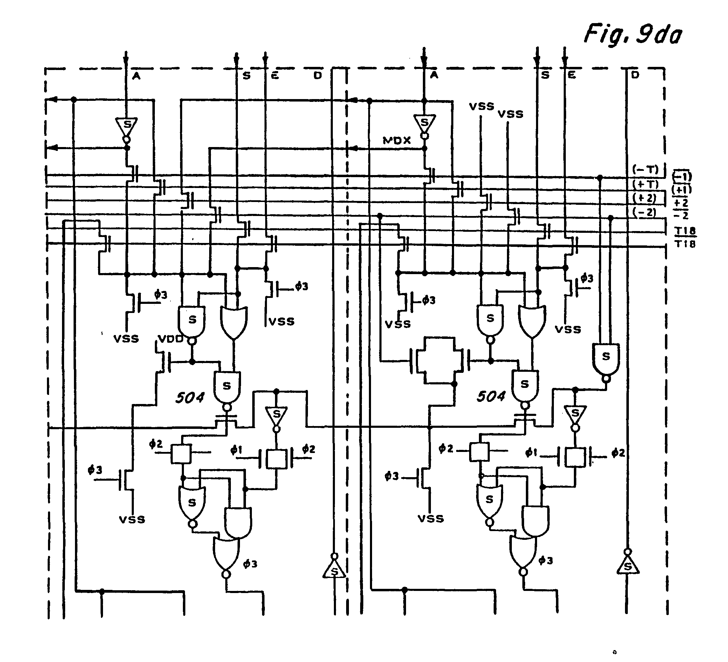

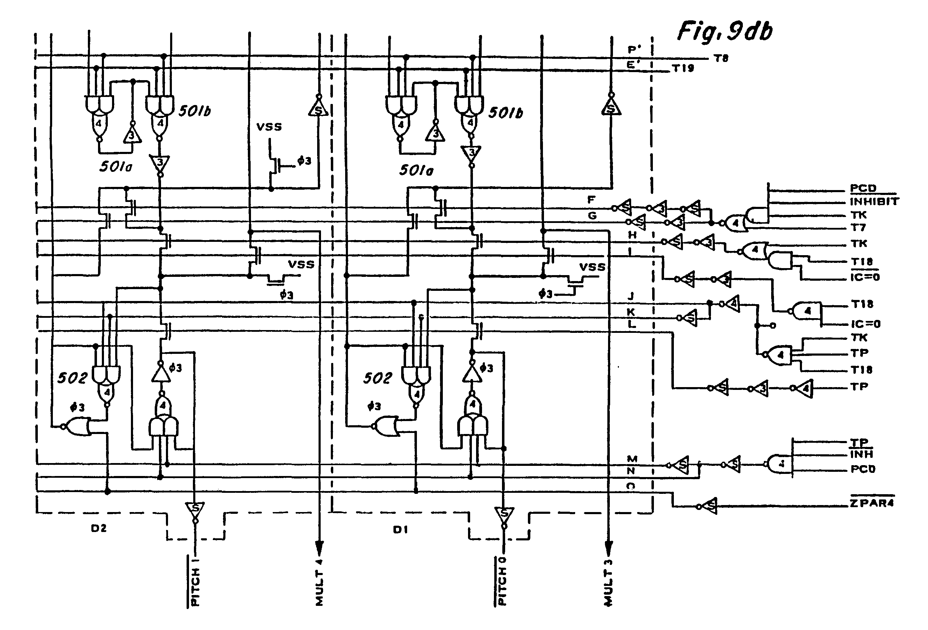

The inputs to multiplier/interpolator 50 are the target values for new parameters, input at the PROMOUT terminal of the first stage, the aforementioned $\overline{+1}$, $\overline{-1}$, $\overline{+2}$ and $\overline{-2}$ signals from recoding logic 52, and the INT and TPAR signals from recoding logic 52. The outputs of multiplier/interpolator 50, MULT 0 MULT13 and $\overline{PITCH\ 0}$—$\overline{PITCH\ 9}$ are applied to filter adder 54. These blocks which make up individual sections of each stage are labelled A-1, B-1 through B-5, C-1 through C-3 and D-1 and D-2. The detailed logic diagrams of each block section are shown in Figures 9a—9d.

The first stage of multiplier/interpolator 50 is comprised of nine A-1 blocks, with an additional bit of storage in the two inverters on its input and are thus responsive to the TPAR signal and to $\overline{-1}$, $\overline{+1}$, $\overline{-2}$ signals output from recoding logic 52. When multiplications occur in multiplier interpolator 50, the most significant bit is always maintained in the left most column elements while the partial sums are continuously shifted toward the right. Inasmuch as each stage of multiplier/interpolator operates on two binary bits, the partial sums, labelled E are each shifted to the right two places. Thus, a total capacity of ten bits is available. As explained earlier, whether coded or direct parameters are utilized, the parameters utilized in multiplier/interpolator 50 are ten bits in length, due to the decoding of any coded values by address PLA 36 and ROM 40. The ten bit parameters which are loaded into multiplier/interpolator 50 represent the target values for current calculations. As the interpolation calculations reach these target values, the target values become current values, and new target values are loaded into multiplier/interpolator 50 at the PROMOUT point.

Current values for filter parameters are stored within multiplier/interpolator 50 in recirculating shift registers contained in all but the most significant bit of each stage. The recirculating shift registers circulate out of B terminals of each block and into the A terminals of the block below. At the bottom or seventh stage, the values are circulated back up through the D terminals into the C terminals. The curent values shifted into the A terminals of each block are the multiplicands. The multipliers are the values input to multiplier/interpolator 50 by recoding logic 52.

The recirculating shift registers within multiplier/interpolator 50 form an eleven bit shift register, with each parameter shifting by each eleven time periods. There are twenty-two time periods, and each parameter K1—K9 is utilized twice during filter calculations. Thus eighteen time periods are required for these nine parameters. The K10 value and the energy value, are each utilized once in filter calculations, and are therefore swapped or exchanged, in the seventh stage of multiplier/interpolator 50. This requires two additional time periods. Of the two remaining time periods, one is utilized during interpolation, and the other is not utilized.

In Figure 9d, there is shown a detailed logic diagram of blocks D2 and D1. In each of the D type blocks, there is shown a group of gates labelled 501. The leftmost, latch 501a is a recirculating latch wherein either K10 or the energy value is stored. The multiplex gate 501b, in gates 501, is controlled by the signals labelled P' and E' which determine whether the signal outputted at the D terminal is the input from terminal A, or the contents of latch 501a. When the input signal at terminal A is the K10 parameter, it is stored in latch 501a and the previous contents of latch 501a is output through multiplexer 501b. The output of multiplex gate 501b is coupled to terminal D through a transmission gate controlled by the signal labelled F.

As discussed above, multiplier/interpolator 50 contains a recirculating shift register formed by vertical contacts between stages. The energy and K1—K10 parameters, which represent the current values, are recirculating through this register, occupying twenty of the possible twenty-two time periods. In order to perform interpolation, the current value of any given parameter must be captured and presented in the stage of multiplier/interpolator 50 to determine the difference between that current value and the target value being input at the appropriate time. Interpolation must take place when each target value is inputted, and not necessarily when the current value has circulated up to the proper position. The new current value (Vn+1) represents the sum of the old current value (Vn) plus some scale factor (N) times the difference between the old current value (Vn) and the target value $(V_T) \cdot N$, the scale value is some fractional number stored in ROM 78 and utilized during variable interpolation. Thus the interpolation formula may be expressed:

$$(1) \qquad V_{n+1} = V_n + N(V_T - V_n)$$

The sample of any given current value must therefore be stored until the unused time period which is utilized for interpolation. Each block in the seventh stage of multiplier/interpolator 50 has a storage latch 502, wherein the current value is temporarily stored. When a parameter to be interpolated circulates into the seventh stage D block, it passes through multiplex 501b and out through the D terminal, the value is also sampled through the transmission gate controlled by the signal N, and placed in storage latch 502. Storage latch 502 has a two input NOR gate on its recirculation line, the other input of which is the ZPAR signal utilized to zero parameters in specific states discussed above. Thus, the current value of the parameter to be interpolated is temporarily stored in storage latch 502. At the appropriate time period (T7 in the embodiment disclosed) the control signal labelled G is generated, and the contents of storage latch 502 is output to the D terminal. Therefore, the recirculating shift registers in multiplier/interpolator 50 contain the parameters K1—K9 an exchanged value representing K10 or Energy, and the about to be interpolated value of one of the parameters. The value to be interpolated is shifted up to the second stage of multiplier/interpolator 50 and, at the same time, the target value for that particular parameter is serially shifted into the first stage. Recoding logic 52 provides a $\overline{-1}$ signal to the second stage, which operates on the value to be interpolated, the result of which is then added to the target value, which generates $V_T-V_n$, for output at the $\Sigma$ output terminal.

The third through sixth stage of multiplier/interpolator 50 act as an eight by ten bit multiplier during the interpolation time period for multiplying the difference between the target value and the current value $(V_T-V_n)$ times the scale value N. The various values for N are stored in ROM 78 and inputted to multiplier/interpolator 50 through recoding logic 52, from multiplex 58 and shift register 66 (as shown in Figure 2b).

The third stage of multiplier/interpolator 50 is different from other stages due to the fact that the sum out of the second stage during interpolation is not merely added to the next calculation. In the interpolation operation, it is required that $V_T-V_n$ be utilized as the multiplicand in order to be multiplied by scale factor N. Thus, the $V_T-V_n$ value must be substituted for the multiplicands which are normally inputted on the A terminal from the B terminal above, in the normal recirculating shift register operation described above. In order to accomplish this exchange, each of the C blocks of multiplier/interpolator 50, shown in Figure 9c, has a multiplex gate 503, controlled by the signal INT, which operates during the interpolation mode. When a $V_T-V_n$ value is present in the second stage of multiplier/interpolator 50, the INT signal controls gates 503 so that the signal at the E input terminal is selected by gate 503 and $V_T-V_n$ is inserted into the recirculating shift register to be utilized as the multiplicand. The $V_T-V_n$ value is inserted during one of the two unused time periods discussed above and therefore has no effect on the recirculating current parameter values. Since during interpolation, the third stage of multiplier/interpolator 50 is utilized as the first stage of an eight by ten bit multiplier, as discussed above, the input on the H terminal must be forced to zero. This is also accomplished by the INT signal coupling Vss into each C block at the H terminal.

The $V_T-V_n$ value is thus forced into the multiplicand position, and multiplied by the scale value N. Therefore the output of the sixth multiplier stage is the value $N(V_T-V_n)$. The seventh stage of multiplier/interpolator 50 is utilized to add the current value of a parameter to the recently calculated $N(V_T-V_n)$ value. As shown in the detail of the D blocks in Figure 9d, at time T18, the normal S input terminal is disabled and the E input is enabled through the bank of transmission gates depicted. $\overline{T18}$ also enables a transmission gate which allows the contents of storage latch 502 to be coupled to full adder 504. Thus the output of full adder 504 is the solution to Equation (1) or $V_n+N(N_T-V_n)$. The output of full adder 504 is coupled through a transmission gate controlled by the signal labelled I and coupled into storage latch 502. This is necessary since the newly interpolated value is always available at T19, due to the requirement that all interpolation calculations take place during the aforementioned window or open spot which occurs in the recirculating shift register. At the appropriate time, the contents of storage latch 502 is forced back into the recirculating shift register through a transmission gate controlled by the signal labelled G. A special case occurs at the last interpolation prior to achieving the target value, or as described earlier herein, the IC=0 state. To avoid the problems generated by slight errors which may cause the interpolated value to be slightly over or under the target value, a special case is utilized for the last interpolation or interpolation count equal zero state (IC=0). As in normal interpolation, the current value of a particular parameter is captured and inserted into the interpolation time period in the recirculating shift register. However, rather than being operated upon by the $\overline{-1}$ signal from recoding logic 52, the current value is zeroed and then subtracted from the target value. The target value is then circulated down to the seventh stage of multiplier/interpolator 50 where it is input on the A terminal. The signal is then shifted through multiplier 501b in each block of the seventh stage, and inserted into storage latch 502 directly by way of a transmission gate controlled by a signal labelled H. Thus, rather than a newly interpolated value, during the last interpolation the target value itself is inserted into storage latch 502. Again as above, at the appropriate time the contents of storage latch 502 is inserted into the recirculating shift register to replace the old current value. This progress is repeated, and a new parameter is interpolated.

A slightly different operation is utilized for interpolation of the pitch value. After a target value for pitch is input to multiplier/interpolator 50, it is circulated down through the recirculating shift register discussed above. Entering the seventh stage at the A terminal, it is passed through multiplex gate 501b and stored in storage latch 502. If the value in storage latch 502 is a pitch value, it is stored in pitch latch 505. Each block of the seventh stage of multiplier/interpolator 50 has a latch 505 for storing one bit of the pitch value. The pitch latch 505 is controlled by the signals labelled M and N in Figure 9d. Pitch latch 505 then stores the pitch value until the appropriate time, when the control signal labelled L allows the pitch value to be outputted.

The outputs of multiplier/interpolator 50 include $\overline{PITCH\ 0}$—$\overline{PITCH\ 9}$, representative of the pitch value stored in the pitch latch formed by gates 505, and MULT 0—MULT 13 which represents the intermediate products generated during filter operation. As shown in Figure 8b, the least significant bit of the MULT output (MULT 0) is forced to the value of the sign bit (MULTSN). This transaction is utilized to prevent the negative drift which normally results from simple truncation of a two's complement number. By forcing the least significant bit to the value of the sign bit, truncation is always toward zero. Those skilled in the art will appreciate that this truncation scheme will help avoid the "limit cycle" problem.

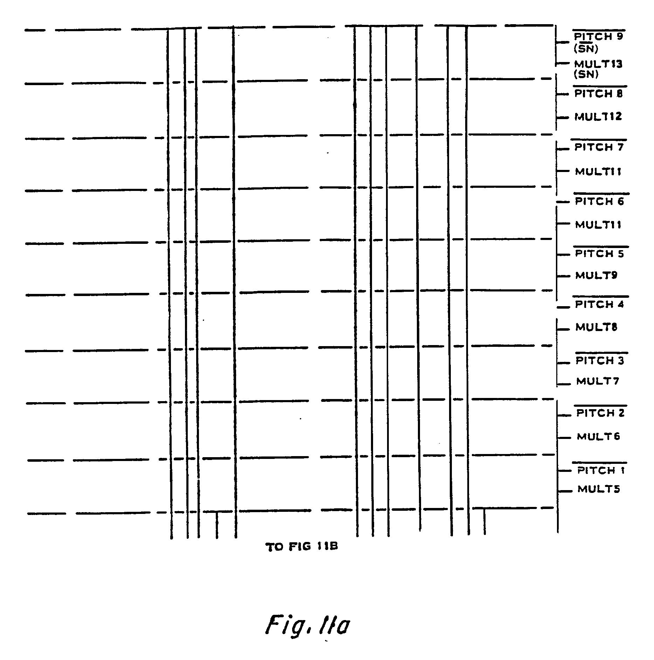

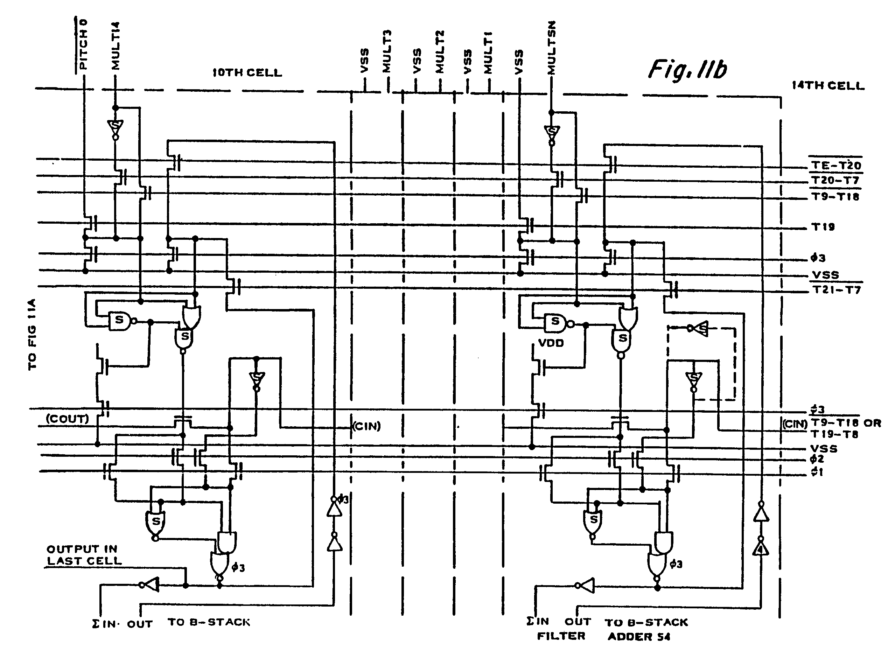

Filter adder 54 is shown in Figure 11. The tenth and fourteenth block of filter adder 54 are shown in detail. Filter adder 54 is utilized to perform the additions and subtractions necessary to solve the equations listed in Table I. There are twenty additions or subtractions required to implement a ten pole filter, utilizing twenty of the twenty-two time periods. During the free time periods, filter adder 54 increments a pitch period counter signal and compares it to the pitch value inputted from multiplier/interpolator 50. The pitch period counter (PPC) is utilized to address periodic or voiced excitation values in ROM 78. When the PPC signal is equal to the pitch value, it is zeroed and begins incrementing again. A more detailed description of the PPC signal operation is listed below.

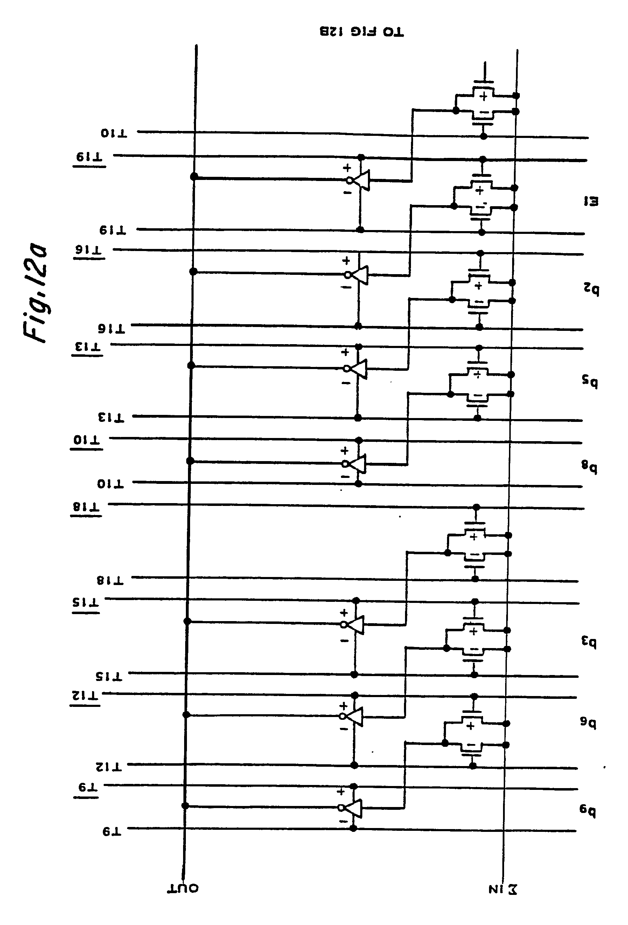

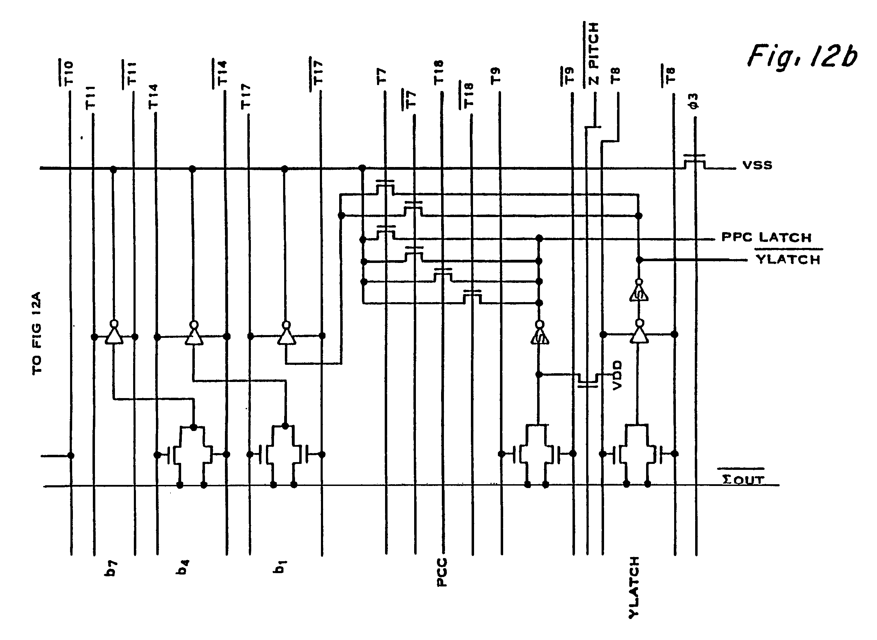

B stack 56 is a temporary storage facility utilized to temporarily store those intermediate values or "b" values which are necessary to solve the equations listed in Table I. B stack 56 is shown in detail in Figure 12. B stack 56 also provides temporary storage for the aforementioned PPC signal and the YLATCH signal which represents the output of the filter formed by multiplier/interpolator 50 and filter adder 56. The YLATCH output is coupled to the digital to analog converter and is utilized to generate analog signals representative of human voice. The PPC signal is output to multipurpose shift register 66 where it is utilized to address excitation values.

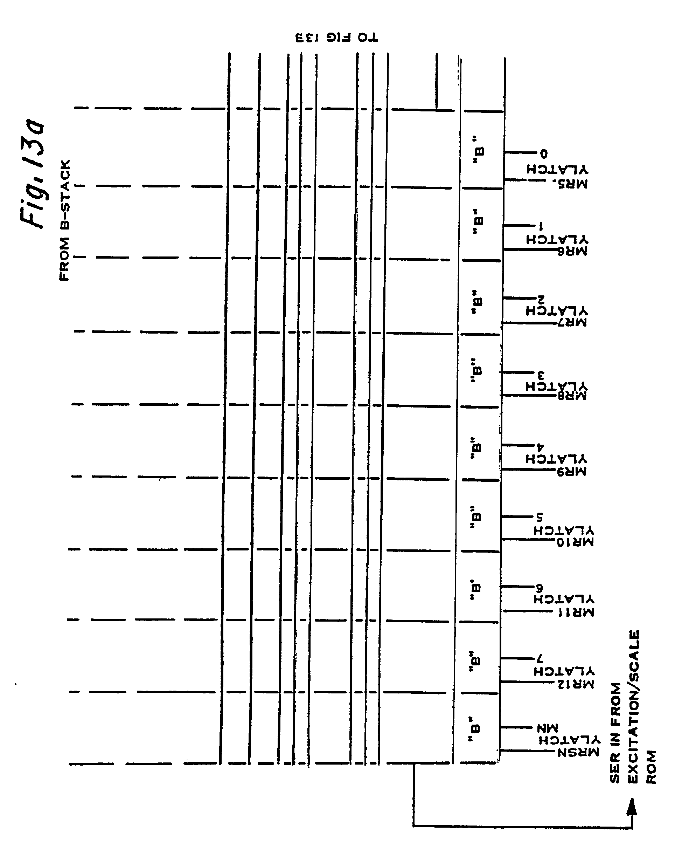

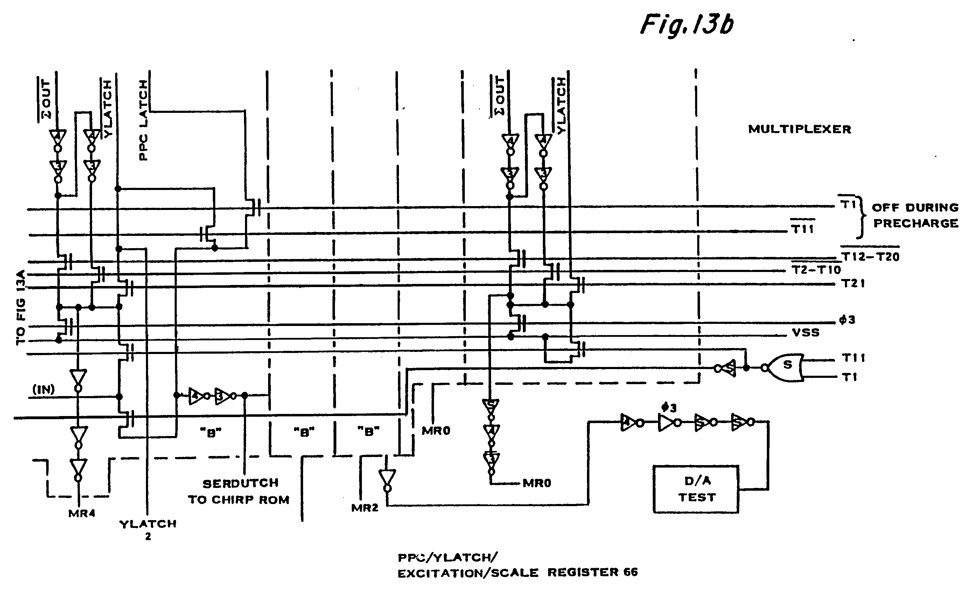

The multipurpose shift register 66 and multiplex 58 are shown in Figure 13, and two of the stages are shown in detail therein. Referring to the block diagram of Figure 2b and the equations of Table I will facilitate an understanding of the interworkings of the filter output circuitry. The MULT outputs from multiplier/interpolator 50 represent intermediate products required to solve the equations of Table I. Such products may be a K value times a b value, or a K value times a Y value. Filter adder 56 then adds or subtracts the intermediate product from a Y value or a b value to obtain a Y value or a b value. B stack 56 is utilized to store these b values, since each b value is utilized in filter adder 56 to calculate the next b value. The PPC signal from B stack 56 is input to shift register 66 and output to multiplex 70. Multiplex 70, not shown in detail, utilizes the PPC signal to address voiced excitation values stored in ROM 78. Any conventional address scheme may be utilized. The values stored in ROM 78 represent a chirp function, as in US—A—4,209,836 as it has been found that a chirp function closely models vocal cord excitation. Multipurpose shift register 66 also receives the aforementioned excitation values, or scale values addressed by an interpolation count signal from ROM 78 which are multiplexed out as MR signals to recoding logic 52.

The scale values stored in ROM 78 are chosen by the operator to generate any desired type of interpolation. As previously discussed, the IC or interpolation count may be any number from one to one hundred twenty seven. The IC count is utilized to address scale factors in ROM 78, thus, in the embodiment disclosed, up to one hundred twenty seven custom scaling values may be stored in ROM 78. A mask programmable option, or programmable type memory will allow easy substitution of scale values or excitation values. Scale values are typically fractional values utilized during interpolation of speech data and may be linearly or nonlinearly related.

Another important feature of the excitation signals provided by ROM 78 concerns the capability of scaling unvoiced excitation. In previous speech synthesis systems, the unvoiced excitation is characterized as white noise. Such an input may be generated in many ways, such as a constant value with a pseudorandom sign bit. This solution is quite adequate; however, the inability to scale the unvoiced excitation to the voiced excitation results in unbalanced excitation signals. ROM 78, in the embodiment disclosed, also stores two unvoiced excitation signals, of approximately equal value, and opposite sign. A random bit is generated by unvoiced address generator 76 and is utilized as one bit in the address of the two aforementioned unvoiced excitation signals. This allows great resolution of the level of the unvoiced excitation, and further, allows the operator to change the level or value to balance excitation signals. Although ROM 78 is disclosed in the present embodiment as a Read Only Memory, those skilled in the art will appreciate that a Random Access Memory will provide an easier method of value changing than the mask programmable method required by a Read Only Memory.

An excitation is also available through tristate buffer 68, shown in Figure 2b. This gate allows synthesizer 10 to be utilized as a residually excited synthesizer, in a vocoder application for example.

Multiplex 58 is utilized to couple the newly calculated "b" values or Y values to recoding logic 52. Multiplex 58 may also couple excitation values or scale values to recoding logic 52, the former for filter calculations, and the latter for interpolations. The outputs of multiplexer 58 are labelled MR0—MR12 and MRSN (for sign bit).

The digital-to-analog converter herein described is particularly well suited to low voltage applications and may be implemented in complementary MIS, such as CMOS and may be intergrated on a common semiconductor substrate with the CMOS synthesizer described above.

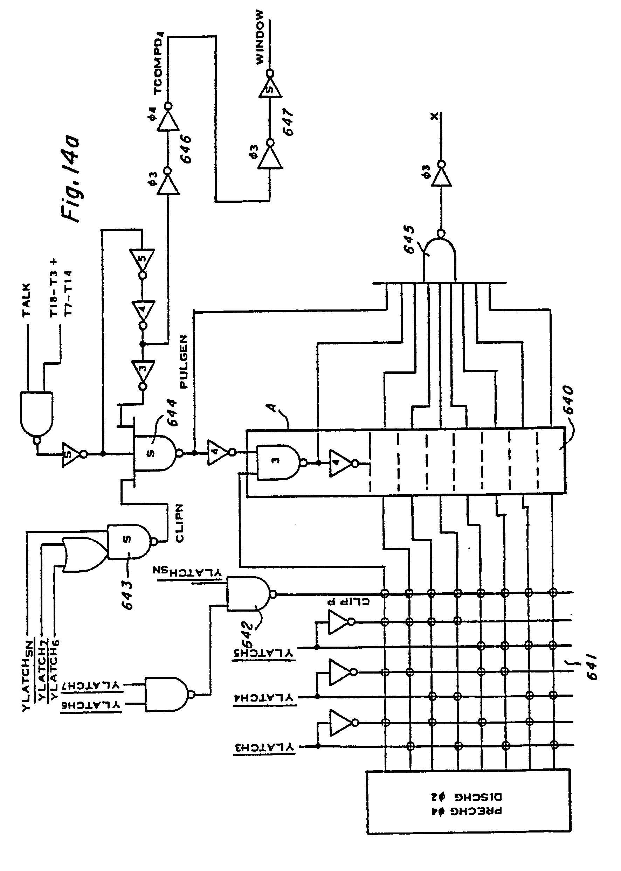

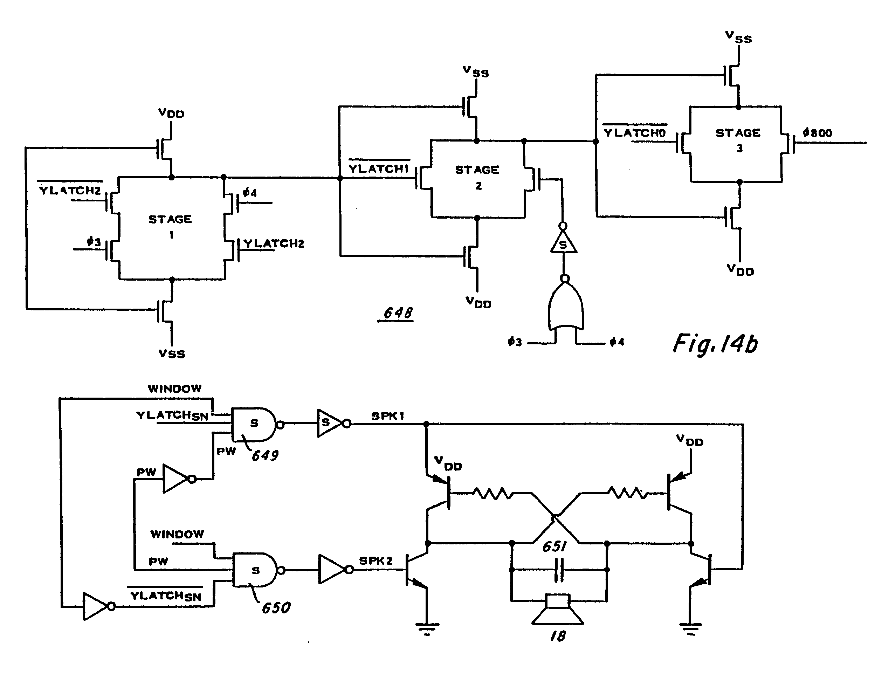

Digital-to-Analog converter 64 receives the YLATCH output signal from B stack 56 in a nine bit, two's complement notation, and converts the YLATCH signal into an analog signal representative of human speech. A detailed description of Digital-to-Analog converter 64 is seen in Figures 14a and b.

In Figure 14a, there is shown a PLA 641 with inputs $\overline{YLATCH3}$, $\overline{YLATCH4}$ and $\overline{YLATCH5}$. Another input is the signal CLIPP from gate 642. Gate 642 and Gate 643 form a clipping circut. A nine bit two's complement signal has a range from −256 to +255. It has been demonstrated that the larger values of a speech waveform convey little intelligence and may be clipped without loss of essential intelligence. Gates 642 and 643 examine the two most significant bits of the YLATCH signal ($\overline{YLATCH6}$ and $\overline{YLATCH7}$) and the sign bit $\overline{YLATCHSN}$ to determine if the absolute value of the incoming value exceeds 64, a CLIPP or CLIPN signal is generated.

Shift register 640 is a controllable register triggered off gate 644. Gate 644 generates a leading edge of the time periods T18 through T3 or T7 through T14, when synthesizer 10 is generating speech. Gate 644 may be disabled by the CLIPN signal, thus preventing a pulse from shifting into register 640. Assuming a large negative value is not present, the leading edge propagates down register 640, to an extent controlled by PLA 641. The YLATCH values input to PLA 641 will determine how far down register 640 the pulse propagates. It should be noted that in the event of a large positive value, CLIPP will cause the pulse to propagate to the end of register 640. The output gate 644 is coupled directly to gate 645, as are the complemented outputs of the eight stages of register 640. Therefore, if gate 644 is enabled, gate 645 will act as an OR functin, and at point X there will be generated a variable width pulse, ranging from one to eight time periods in length. Additionally, the composite signal comprised of TALK, and T18 through T3 or T7 through T14 is delayed by gates 646 to form TCOMPD4, a delayed signal. The TCOMPD4 signal is further delayed to form a signal called WINDOW. Gates 647 are shown providing the additional half bit of delay; however, for additional accuracy, the WINDOW signal may be finely adjusted utilizing high speed clock signals. The WINDOW signal is required to remove the PULGEN, minimum pulse width, when all inputs are zero. The PULGEN signal is required to charge the logics in the programmable delay shown in Figure 14b.

In Figure 14b is shown a detailed logic diagram of a three stage programmable delay 648 and the output speaker drive circuitry. The programmable delay shown in Figure 14 has three stages. Each stage has a positive or P type device and a negative or N type device above and below it. A zero at point X will turn on the P device in stage 1, the N device in stage two and the P device in stage 3, causing PW to be a logic one or VDD. Thus a positive pulse out of gate 645 (Figure 14a) will be propagated through programmable delay 648 statically. When the pulse ends, or X goes to a logic one, the P device in stage one shuts off and the N device conducts. Following this, the output of stage one will go to Vss, or logic zero, conditionally, based upon the clock gates contained between the P device and N device. The clocked gates in stage one are thus capable of extending the pulse-width seen at PW. Stage one is clocked to provide either one half of a time period of delay, or no additional delay. Similarly, stage two can provide either one fourth of a time period delay, or no additional delay. Stage three also operates similarly; however, a special high speed clock Ø800 is utilized to provide a delay of one eigth of a time period. Thus, the output at PW is either zero, when large negative numbers cause gate 644 to be disabled, or a pulse from one to eight and seven/eighths time period in length, with one eighth time period resolution.

The PW signal is still expressed in two's complement notation, and must therefore be converted to sign magnitude data for negative numbers. Gates 649 and 650 are utilized to generate complementary sign magnitude, pulse width modulated signals. The positive numbers are generated by gate 650 (YLATCHSN equal zero) with PW and WINDOW, to eliminate the PULGEN pulses. PW is inverted to effectively convert negative numbers (YLATCHSN equal one) to sign magnitude data through gate 649.

The two pulsewidth modulated values SPK1 and SPK2 are then applied to a push/pull output circuit 651. Circuit 651 is utilized since it possesses no DC power component, and will effectively drive speaker 18.

TABLE I

| Equation | Stage |
|---|---|
| $Y_{10}(i)=Y_{11}(i)-K_{10}b_{10}(i-1)$ | 10 |
| $Y_9(i)=Y_{10}(i)-K_9b_9(i-1)$ | 9 |
| $b_{10}(i)=b_9(i-1)+K_9Y_9(i)$ | 9 |
| $Y_8(i)=Y_9(i)-K_8b_8(i-1)$ | 8 |
| $b_9(i)=b_8(i-1)+K_8Y_8(i)$ | 8 |
| $Y_7(i)=Y_8(i)-K_7b_7(i-1)$ | 7 |
| $b_8(i)=b_7(i-1)+K_7Y_7(i)$ | 7 |
| $Y_6(i)=Y_7(i)-K_6b_6(i-1)$ | 6 |
| $b_7(i)=b_6(i-1)+K_6Y_6(i)$ | 6 |
| $Y_5(i)=Y_6(i)-K_5b_5(i-1)$ | 5 |
| $b_6(i)=b_5(i-1)+K_5Y_5(i)$ | 5 |
| $Y_4(i)=Y_5(i)-K_4b_4(i-1)$ | 4 |
| $b_5(i)=b_4(i-1)+K_4Y_4(i)$ | 4 |
| $Y_3(i)=Y_4(i)-K_3b_3(i-1)$ | 3 |
| $b_4(i)=b_3(i-1)+K_3Y_3(i)$ | 3 |
| $Y_2(i)=Y_3(i)-K_2b_2(i-1)$ | 2 |
| $b_3(i)=b_2(i-1)+K_2Y_2(i)$ | 2 |
| $Y_1(i)=Y_2(i)-K_1b_1(i-1)$ | 1 |
| $b_2(i)=b_1(i-1)+K_1Y_1(i)$ | 1 |
| $b_1(i)=Y_1(i)$ | |

## Claims

1. A speech synthesis system comprising:

memory means (12—Figure 1b) for storing a plurality of digital speech values including digital speech values representative of digital filter coefficients,

controller means (14—Figure 1b) operatively associated with said memory means for accessing selected portions of said plurality of digital speech values including said digital speech values representative of digital filter coefficients in said memory means,

separate first and second source of excitation speech signals for alternatively providing voiced/unvoiced excitation speech signals,

speech synthesis means (10—Figure 1b) including digital filter means (50, 52, 54, 56, 58—Figure 2b) coupled to said controller means and to a source of voiced/unvoiced excitation speech signals for selectively converting said voiced and unvoiced excitation speech signals and said accessed digital speech values representative of digital filter coefficients into digital speech signals representative of human speech,

converter means (64—Figure 2b) connected to the output of said digital filter means for converting said digital speech signals representative of human speech into analog signals, and

audio means (18—Figure 2b) coupled to said converter means for converting said analog signals into audible sound characterized by second memory means (78—Figure 2b) internal to said speech synthesis means for storing digital data including voiced and unvoiced excitation speech signals and serving as said first source of voiced/unvoiced excitation speech signals,

voiced/unvoiced excitation speech signal generating means (70—Figure 2b) operatively associated with said second memory means for selectively generating voiced and unvoiced excitation speech signals as stored in said second memory means,

a separate external voiced/unvoiced excitation speech input means (80—Figure 2b) distinct from said speech synthesis means for receiving externally generated voiced/unvoiced excitation speech signals and serving as said second source of voiced/unvoiced excitation speech signals external to said speech synthesis means,

control means (68—Figure 2b) electrically coupling said second memory means from which said voiced and unvoiced excitation speech signals are generated within said speech synthesis means to said digital filter means,

said external voiced/unvoiced excitation speech input means being electrically coupled to said digital filter means independently of said control means,

control signal input means (82—Figure 2b) operably associated with said control means for receiving an external control signal,

said control means being deactivated in response to reception of the external control signal by said control signal input means and communication thereof to said control means for electrically uncoupling said second memory means from said digital filter means, and

said external voiced/unvoiced excitation speech input means being adapted to be used for providing external voiced/unvoiced excitation speech signals to said digital filter means during the time period when said second memory means is electrically uncoupled from said digital filter means.

2. A speech synthesis system as set forth in Claim 1, further characterized in that said digital filter means comprises a linear predictive filter.

3. A speech synthesis system as set forth in either of Claims 1 or 2, further characterized in that said control means comprises a tri-state buffer (68—Figure 2b).

4. A speech synthesis system as set forth in any of Claims 1 to 3, further characterized in that said externally generated excitation signals comprise residual excitation signals.

## Patentansprüche

1. Sprachsynthesesystem mit:

einem Speichermittel (12—Figur 1b) zum Speichern mehrerer digitaler Sprachwerte einschließlich digitaler Sprachwerte, die digitale Filterkoeffizienten repräsentieren,

einem Steuermittel ((14—Figur 1b), das dem Speichermittel wirkungsmäßig zugeordnet ist und einen Zugriff auf ausgewählte Abschnitte der mehreren digitalen Sprachwerte einschließlich der digitalen Sprachwerte, die digitale Filterkoeffizienten in dem Speichermittel repräsentieren,

getrennten ersten und zweiten Quellen von Sprachanregungssignalen zum abwechselnden Erzeugen stimmhafter und stimmloser Sprachanregungssignale,

einem Sprachsynthesemittel (10—Fig. 1b) einschließlich digitaler Filtermittel (50, 52, 54, 56, 58—Figur 2b), die an das Steuermittel und an eine Quelle von Stimmhaft/Stimmlos-Sprachanregungssignalen zum selektiven Umsetzen der stimmhaften und stimmlosen Sprachanregungssignalen sowie der erfaßten digitalen Sprachwerte, die digitale Filterkoeffizienten repräsentieren, in digitale Sprachsignale, die menschliche Sprache repräsentieren,

einem Umsetzermittel (64—Figur 2b), das an den Ausgang der digitalen Filtermittel angeschlossen ist und die menschliche Sprache repräsentierenden digitalen Sprachwerte in Analogsignale umsetzt, und

einem Audiomittel (18—Figur 2b), das an das Umsetzermittel angeschlossen ist und die analogen Signale in hörbare Töne umsetzt,

gekennzeichnet durch ein zweites Speichermittel (78—Figur 2b) in dem Sprachsynthesemittel zum Speichern digitaler Daten einschließlich von stimmhaften und stimmlosen Sprachanregungssignalen, wobei dieses Speichermittel als die erste Quelle von stimmhaften und stimmlosen Sprachanregungssignalen dient,

Mittel (70—Figur 2b) zum Erzeugen stimmhafter und stimmloser Sprachanregungssignale, die den zweiten Speichermitteln wirkungsmäßig zugeordnet sind, damit in den zweiten Speichermitteln gespeicherte stimmhafte und stimmlose Sprachanregungssignale in ausgewählter Weise erzeugt werden,

ein getrenntes, externes Eingabemittel (80—Figur 2b) für stimmhafte und stimmlose Sprachanregungssignale, das von dem Sprachsynthesemittel verschieden ist und extern erzeugte stimmhafte und stimmlose Sprachanregungssignale empfängt und als die zweite Quelle von stimmhaften und stimmlosen Sprachanregungssignalen außerhalb des Sprachsynthesemittels dient,

ein Steuermittel (68—Figur 2b), das das zweite Speichermittel, von dem die stimmhaften und stimmlosen Sprachanregungssignale innerhalb des Sprachsynthesemittels erzeugt werden, elektrisch mit den digitalen Filtermitteln koppelt,

wobei das externe Eingabemittel für stimmhafte und stimmlose Sprachanregungssignale elektrisch mit den digitalen Filtermitteln unabhängig von dem Steuermittel gekoppelt ist,

ein Steuersignaleingabemittel (82—Figur 2b), das dem Steuermittel für den Empfang eines externen Steuersignals wirkungsmäßig zugeordnet ist,

wobei das Steuermittel abhängig von Empfang des externen Steuersignals durch das Steuersignaleingabemittel und dessen Übertragung zu dem Steuermittel deaktiviert wird, damit die zweiten Speichermittel elektrisch von den digitalen Filtermitteln getrennt werden und

wobei das externe Eingabemittel für stimmhafte und stimmlose Sprachanregungssignale so ausgebildet ist, daß es während der Zeitperiode, in der die zweiten Speichermittel elektrisch von den digitalen Filtermitteln getrennt sind, externe stimmhafte und stimmlose Sprachanregungssignale an die digitalen Filtermittel liefern kann.

2. Sprachsynthesesystem nach Anspruch 1, dadurch gekennzeichnet, daß die digitalen Filtermittel aus einem linearen Voraussagefilter bestehen.

3. Sprachsynthesesystem nach einem der Ansprüche 1 oder 2, dadurch gekenneichnet, daß das Steuermittel einen Drei-Status-Puffer (68—Figur 2b) umfaßt.

4. Sprachsynthesesystem nach einem der Ansprüche 1 bis 3, dadurch gekennzeichnet, daß die extern erzeugten Anregungssignale Rest-Anregungssignale umfassen.

## Revendications

1. Système de synthèse de la parole comportant:

des moyens de mémoire (12—Figure 1b) pour mémoriser plusieurs valeurs de parole numériques incluant des valeurs de parole numériques représentant des coefficients de filtre numérique,

des moyens de commande (14—Figure 1b) associés en fonctionnement avec lesdits moyens de mémoire pour commander l'accès sélectif de parties desdites plusieurs valeurs de parole numériques incluant lesdites valeurs de parole numérique représentant des coefficients de filtre numérique dans lesdits moyens de mémoire,

des première et seconde sources séparées de signaux de parole d'excitation destinées à produire alternativement des signaux de parole d'excitation sonore/sourde,

des moyens de synthèse de la parole (10—Figure 1b) comprenant des moyens de filtre numérique (50, 52, 54, 56, 58—Figure 2b) couplés avec lesdits moyens de commande et avec une source de signaux de parole d'excitation sonore/sourde pour convertir sélectivement lesdits signaux de parole d'excitation sourde et sonore ainsi que lesdites valeurs de parole numérique représentant des coefficients de filtre numérique et auxquelles on a eu accès, en des signaux de parole numériques représentant la parole humaine,

des moyens de convertisseur (64—Figure 2b) connectés avec la sortie desdits moyens de filtre numérique afin de convertir lesdits signaux de parole numériques représentant la parole humaine, en des signaux analogiques, et

des moyens de son (18—Figure 2b) couplés avec lesdits moyens de convertisseurs afin de convertir lesdits signaux analogiques en un son audible, caractérisé par des seconds moyens de mémoire (78—Figure 2b) internes auxdits moyens de synthèse de la parole afin de mémoriser des données numériques comprenant des signaux de parole d'excitation sonore et sourde et de servir comme ladite première source de signaux de parole d'excitation sonore/sourde, des moyens de production de signaux de parole d'excitation sonore/sourde (70—Figure 2b) associés en fonctionnement avec lesdits seconds moyens de mémoire afin de produire sélectivement des signaux de parole d'excitation sonore et sourde tels que mémorisés dans lesdits seconds moyens de mémoire,

un moyen séparé externe d'entrée de parole d'excitation sourde/sonore (80—Figure 2b) distinct desdits moyens de synthèse de la parole et destiné à recevoir des signaux de la parole d'excitation sonore/sourde produits à l'extérieur et à servir comme ladite seconde source de signaux de la parole sonore/sourde externe auxdits moyens de la synthèse de la parole,

des moyens de commande (68—Figure 2b) reliant électriquement lesdits seconds moyens de mémoire à partir desquels sont produits lesdits signaux de la parole d'excitation sonore et sourde à l'intérieur desdits moyens de synthèse de la parole auxdits moyens de filtre numérique, ledit moyen externe d'entrée de la parole d'excitation sonore/sourde étant électriquement couplé auxdits moyens de filtre numérique indépendamment desdits moyens de commande,

des moyens d'entrée de signal de commande (82—Figure 2b) associés en fonctionnement avec lesdits moyens de commande pour recevoir un signal de commande externe, lesdits moyens de commande étant désactivés en réponse à la réception du signal de commande externe par lesdits moyens d'entrée de signaux de commande et la communication de celui-ci auxdits moyens de commande pour découpler électriquement lesdits seconds moyens de mémoire desdits moyens de filtre numérique, et lesdits moyens externes d'entrée de la parole d'excitation sonore/sourde étant adaptés de manière à pourvoir être utilisés pour fournir des signaux externes de parole d'excitation sonore/sourde auxdits moyens de filtre numérique pendant la période de temps où lesdits moyens de mémoire sont électriquement découplés desdits moyens de filtre numérique.

2. Système de synthèse de parole selon la revendication 1, caractérisé en outre en ce que lesdits moyens de filtre numérique comprennent un filtre linéaire à prédiction.

3. Système de synthèse de parole selon la revendication 1 ou 2, caractérisé en outre en ce que lesdits moyens de commande comprennent un tampon à trois états (68—Figure 2b).

4. Système de synthèse de parole selon l'une quelconque des revendications 1 à 3, caractérisé en outre en ce que lesdits signaux d'excitation produits à l'extérieur comprennent des signaux résiduels.

*Fig. 1a*

18a

2

16

1

| KEYBOARD 16 | → | MICROPROCESSOR 14 | ← → | SYNTHESIZER 10 | ← → | DATA ROM 12 |
|---|---|---|---|---|---|---|

18   SPEAKER

*Fig. 1b*

## Fig.2a

Fig.2b

Fig. 3

4

Fig. 4

5

Fig. 5

EP 0 162 479 B1

Fig. 6a

EP 0 162 479 B1

Fig.6b

Fig. 7

EP 0 162 479 B1

Fig. 8a

*Fig. 8b*

Fig.9ab

Fig.9aa

NOTE A

BETWEEN 4TH AND 5TH CELLS
AND 8TH AND 9TH CELLS
ADDITIONAL BUFFERING

Fig.9ba

Fig.9ac

Fig. 9bc

Fig. 9bb

## Fig. 9ca

## Fig. 9cb

*Fig. 9cc*

Fig. 9da

Fig. 9db

EP 0 162 479 B1

Fig. 10a

20

Fig.10b

EP 0 162 479 B1

*Fig.10c*

PRECHG φ4
DISCHG φ2

MR12D

MRSND

T17

(REC50)

PRECHG φ3
DISCHG φ1

$\overline{+1_7}$

$\overline{-1_7}$

$\overline{-2_7}$

$\overline{+2_7}$

$\overline{T18}$

T18

MR4 — 1 BIT DEL — MR4D

MR5 — 1 BIT DEL — MR5D

MR6 — 2 BIT DEL — MR6D

MR7 — 3 BIT DEL — MR7D

MR8 — 3 BIT DEL — MR8D

MR9 — 3 BIT DEL — MR9D

MR10 — 4 BIT DEL — MR10D

MR11 — 4 BIT DEL — MR11D

MR12 — 5 BIT DEL — MR12D

MRSN — 5 BIT DEL — MRSND

1 BIT DELAY

22

Fig. 11a

PITCH 9
(SN)
MULT13
(SN)
PITCH 8
MULT12
PITCH 7
MULT11
PITCH 6
MULT11
PITCH 5
MULT9
PITCH 4
MULT8
PITCH 3
MULT7
PITCH 2
MULT6
PITCH 1
MULT5

TO FIG 11B

Fig. IIb

EP 0 162 479 B1

Fig. 12a

Fig. 12b

Fig. 13a

FROM B-STACK

"B" "B" "B" "B" "B" "B" "B" "B" "B"

MRSN YLATCH MN
MR12 YLATCH 7
MR11 YLATCH 6
MR10 YLATCH 5
MR9 YLATCH 4
MR8 YLATCH 3
MR7 YLATCH 2
MR6 YLATCH 1
MR5. YLATCH 0

SER IN FROM
EXCITATION/SCALE
ROM

TO FIG 13B

EP 0 162 479 B1

Fig. 13b

MULTIPLEXER

PPC/YLATCH/
EXCITATION/SCALE REGISTER 66

Fig.14a

Fig.14b